(19) Europäisches Patentamt / European Patent Office / Office européen des brevets

(11) **EP 4 734 606 A1**

(12) **EUROPEAN PATENT APPLICATION**
published in accordance with Art. 153(4) EPC

(43) Date of publication:
**29.04.2026 Bulletin 2026/18**

(21) Application number: **24850752.7**

(22) Date of filing: **12.07.2024**

(51) International Patent Classification (IPC):
*H04W 28/20* (2009.01)

(52) Cooperative Patent Classification (CPC):
**H04W 28/20; H04W 28/26; H04W 72/0457**

(86) International application number:
**PCT/CN2024/105311**

(87) International publication number:
**WO 2025/031101 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 CN 202311002198**

(71) Applicant: **Huawei Technologies Co., Ltd.
Shenzhen, Guangdong 518129 (CN)**

(72) Inventors:
• **LI, Wenjun
  Shenzhen, Guangdong 518129 (CN)**
• **RUAN, Wei
  Shenzhen, Guangdong 518129 (CN)**
• **MA, Yunsi
  Shenzhen, Guangdong 518129 (CN)**

(74) Representative: **Gill Jennings & Every LLP
The Broadgate Tower
20 Primrose Street
London EC2A 2ES (GB)**

(54) **DATA TRANSMISSION METHOD AND APPARATUS**

(57) A data transmission method and an apparatus are provided, and relate to the communication field. In the method, a second AP receives a first frame from a first AP, where the first frame includes first indication information and second indication information, the first indication information indicates whether the first AP allows another AP to perform data transmission simultaneously with the first AP, the second indication information indicates a first bandwidth, and the first bandwidth is used by the first AP to receive a first acknowledgment frame; and when the first AP separately sends data to at least one first STA, the second AP separately sends data to K second STAs, where K is a positive integer. The second AP receives a second acknowledgment frame by using a bandwidth other than the first bandwidth. In the foregoing design, because the bandwidth occupied by K second acknowledgment frames does not overlap with the first bandwidth, reliability of receiving the first acknowledgment frame by the first AP and reliability of receiving the second acknowledgment frame by the second AP can be ensured.

FIG. 6

**Description**

This application claims priority to Chinese Patent Application No. 202311002198.2, filed with the China National Intellectual Property Administration on August 9, 2023 and entitled "DATA TRANSMISSION METHOD AND APPARATUS", which is incorporated herein by reference in its entirety.

TECHNICAL FIELD

This application relates to the field of communication technologies, and in particular, to a data transmission method and an apparatus.

BACKGROUND

With evolution of a wireless fidelity (wireless fidelity, Wi-Fi) technology, to further improve utilization of a wireless spectrum, Wi-Fi 8 uses access point (access point, AP) coordination (coordination) as an important optimization method.
Currently, there are a plurality of mechanisms mainly relating to AP coordination. A coordinated spatial reuse (coordinated spatial reuse, Co-SR) technology is an important AP coordination mechanism. Specifically, in Co-SR, a plurality of APs whose coverage areas overlap coordinate with each other, so that the plurality of APs can communicate with respective associated stations (station, STA) simultaneously, to improve a capacity of an entire network.

SUMMARY

This application provides a data transmission method and an apparatus, to improve a capacity of an entire network.
According to a first aspect, this application provides a data transmission method. The method may be performed by a first AP or a module (for example, a chip) in the first AP. The method includes: The first AP sends a first frame, where the first frame includes first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received. The first AP separately sends data to at least one first STA.
According to the foregoing method, the first AP does not specify an AP that performs data transmission simultaneously with the first AP, and does not need to collect related information of an AP that may participate in performing data transmission simultaneously with the first AP, so that signaling overheads can be reduced. Each AP that receives the first frame may independently determine whether the AP expects to participate in performing data transmission simultaneously with the first AP, thereby improving flexibility of the AP that participates in performing data transmission simultaneously. The second indication information indicates the first bandwidth, and the another AP that performs data transmission simultaneously with the first AP may receive a corresponding acknowledgment frame by using a bandwidth other than the first bandwidth. Therefore, reliability of receiving the first acknowledgment frame by the first AP can be improved.
In a possible design, when the first AP allows the another AP to perform data transmission simultaneously with the first AP, the another AP that performs data transmission simultaneously with the first AP receives a corresponding acknowledgment frame by using a bandwidth other than the first bandwidth.
In a possible design, when the first AP allows the another AP to perform data transmission simultaneously with the first AP, an end time for sending data by the another AP that performs data transmission simultaneously with the first AP is the same as an end time for sending data by the first AP.
In a possible design, after the first AP separately sends the data to the at least one first STA, the first AP sends a second frame, where the second frame is used to configure, for the at least one first STA, a resource occupied for sending the first acknowledgment frame.
In a possible design, the first frame further includes third indication information, and the third indication information indicates duration of the second frame; and when the first AP allows the another AP to perform data transmission simultaneously with the first AP, duration for which the another AP that performs data transmission simultaneously with the first AP sends a frame of a same type as the second frame is the same as the duration of the second frame.
In the foregoing design, a start time for receiving the corresponding acknowledgment frame by the another AP that performs data transmission simultaneously with the first AP may be aligned with a start time for receiving the first acknowledgment frame by the first AP.

In a possible design, when the first AP allows the another AP to perform data transmission simultaneously with the first AP, a part or all of a resource occupied by the first AP for sending the data is used by the another AP that performs data transmission simultaneously with the first AP to send the data.

In a possible design, the first frame further includes fourth indication information, and the fourth indication information indicates a tolerable interference signal strength respectively corresponding to the at least one first STA; and when the first AP allows the another AP to perform data transmission simultaneously with the first AP, if a target first STA exists, the another AP that performs data transmission simultaneously with the first AP does not perform data transmission on one or more sub-channels on which a resource unit RU corresponding to the target first STA is located, where an interference signal strength from the another AP to the target first STA is greater than a tolerable interference signal strength of the target first STA, the interference signal strength from the another AP to the target first STA is determined based on a transmit power of the another AP and a pathloss between the another AP and the target first STA, and the target first STA is one of the at least one first STA.

In a possible design, that the first AP sends the first frame includes:

The first AP sends the first frame to at least one AP, where a coverage area respectively corresponding to the at least one AP overlaps with a coverage area of the first AP, and

the another AP that performs data transmission simultaneously with the first AP is one of the at least one AP.

In the foregoing design, an AP whose coverage area overlaps with the coverage area of the first AP may receive the first frame, and determine, based on the first frame, whether to perform data transmission simultaneously with the first AP.

According to a second aspect, this application provides a data transmission method. The method may be performed by a second AP or a module (for example, a chip) in the second AP. The method includes: The second AP receives a first frame from a first AP, where the first frame includes first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received. When the first AP separately sends data to at least one first STA, the second AP separately sends data to K second STAs, where K is a positive integer. The second AP receives a second acknowledgment frame by using a bandwidth other than the first bandwidth, where the second acknowledgment frame indicates whether data sent by the second AP is successfully received.

In the foregoing design, the second AP can receive the first frame, and determine, based on the first indication information, that the second AP may attempt to participate in performing data transmission simultaneously with the first AP. Because the second indication information indicates the first bandwidth, it may be configured that the bandwidth occupied by K second acknowledgment frames does not overlap with the first bandwidth, so that receiving of the first acknowledgment frame by the first AP and receiving of the second acknowledgment frame by the second AP do not interfere with each other, to ensure reliability of receiving the first acknowledgment frame by the first AP and reliability of receiving the second acknowledgment frame by the second AP.

In a possible design, an end time for sending data by the second AP is the same as an end time for sending data by the first AP.

In a possible design, after the second AP separately sends the data to the K second STAs, the second AP sends a third frame, where the third frame is used to configure, for the K second STAs, a resource occupied for sending the second acknowledgment frame.

In a possible design, the first frame further includes third indication information, the third indication information indicates duration of a second frame, and the second frame is used to configure, for the at least one first STA, a resource occupied for sending the first acknowledgment frame; and duration for which the second AP sends the third frame is the same as the duration of the second frame.

In a possible design, a part or all of a resource occupied by the first AP for sending the data is used by the second AP to send the data.

In a possible design, the first frame further includes fourth indication information, and the fourth indication information indicates a tolerable interference signal strength respectively corresponding to the at least one first STA. The second AP obtains a pathloss between each of the at least one first STA and the second AP. The second AP determines S first STAs from the at least one first STA based on the tolerable interference signal strength respectively corresponding to the at least one first STA, a transmit power of the second AP, and the pathloss between each of the at least one first STA and the second AP, where S is a positive integer, an interference signal strength from the second AP to a $t^{th}$ first STA in the S first STAs is greater than a tolerable interference signal strength of the $t^{th}$ first STA, the interference signal strength from the second AP to the $t^{th}$ second STA is determined based on the transmit power of the second AP and a pathloss between the $t^{th}$ first STA and the second AP, the $t^{th}$ first STA is one of the S first STAs, t is a positive integer, and t is less than or equal to S. The second AP does not send the data on one or more sub-channels on which RUs respectively corresponding to the S first STAs are located.

In the foregoing design, the second AP may determine whether there is a first STA whose interference signal strength is greater than the tolerable interference signal strength, that is, determine whether the resource occupied by the first AP for sending the data needs to be punctured.

In a possible design, the second AP does not transmit a preamble on the one or more sub-channels.

In a possible design, the second AP obtains a pathloss between each of at least one second STA and the first AP, where the at least one second STA is a STA that the second AP expects to schedule. The second AP determines the K second STAs from the at least one second STA based on a tolerable interference signal strength respectively corresponding to the at least one second STA, a transmit power of the first AP, and a pathloss between each of the at least one second STA and the first AP; and an interference signal strength from the first AP to a $k^{th}$ second STA in the K second STAs is not greater than a tolerable interference signal strength of the $k^{th}$ second STA, the interference signal strength from the first AP to the $k^{th}$ second STA is determined based on the transmit power of the first AP and a pathloss between the $k^{th}$ second STA and the first AP, the $k^{th}$ second STA is any one of the K second STAs, k is a positive integer, and k is less than or equal to K.

In the foregoing design, the second AP may determine the K second STAs, that is, K second STAs suitable for scheduling.

In a possible design, after the second AP receives the first frame from the first AP, the second AP receives a preamble sent by the first AP, where the preamble sent by the first AP indicates the resource occupied by the first AP for sending the data. The second AP starts a backoff counter. When the second AP separately sends the data to the K second STAs, if the resource occupied by the first AP for sending the data is in an available state before the backoff counter ends, the second AP separately sends the data to the K second STAs after the backoff counter ends.

In the foregoing design, when detecting that the resource occupied by the first AP for sending the data is in an unavailable state, an AP that expects to participate in performing data transmission simultaneously with the first AP can give up participating in performing data transmission simultaneously with the first AP, so that a plurality of APs do not participate in performing data transmission simultaneously with the first AP.

In a possible design, that the resource occupied by the first AP for sending the data is in the available state means that the resource occupied by the first AP for sending the data is occupied, but a reserved resource is not occupied.

In a possible design, a size of the reserved resource is any one of 26 subcarriers, 52 subcarriers, or 106 subcarriers.

In a possible design, the resource occupied by the second AP for sending the data further includes the reserved resource, and the resource occupied by the first AP for sending the data does not include the reserved resource.

According to a third aspect, this application provides a data transmission method. The method includes: A first AP sends a first frame, where the first frame includes first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received. The first AP separately sends data to at least one first STA. The second AP receives the first frame from the first AP. When the first AP separately sends the data to the at least one first STA, the second AP separately sends data to K second STAs, where K is a positive integer. The second AP receives a second acknowledgment frame by using a bandwidth other than the first bandwidth, where the second acknowledgment frame indicates whether data sent by the second AP is successfully received.

According to a fourth aspect, a data transmission apparatus is provided. The apparatus is a first AP or a chip in the first AP. The apparatus includes:

A processing unit invokes a transceiver unit to send a first frame, where the first frame includes first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received; and separately send data to at least one first STA.

In a possible design, when the first AP allows the another AP to perform data transmission simultaneously with the first AP, the another AP that performs data transmission simultaneously with the first AP receives a corresponding acknowledgment frame by using a bandwidth other than the first bandwidth.

In a possible design, when the first AP allows the another AP to perform data transmission simultaneously with the first AP, an end time for sending data by the another AP that performs data transmission simultaneously with the first AP is the same as an end time for sending data by the first AP.

In a possible design, the transceiver unit is further configured to: after separately sending the data to the at least one first STA, send a second frame, where the second frame is used to configure, for the at least one first STA, a resource occupied for sending the first acknowledgment frame.

In a possible design, the first frame further includes third indication information, and the third indication information indicates duration of the second frame; and

when the first AP allows the another AP to perform data transmission simultaneously with the first AP, duration for which the another AP that performs data transmission simultaneously with the first AP sends a frame of a same type as the second frame is the same as the duration of the second frame.

In a possible design, when the first AP allows the another AP to perform data transmission simultaneously with the first AP, a part or all of a resource occupied by the first AP for sending the data is used by the another AP that performs data transmission simultaneously with the first AP to send the data.

In a possible design, the first frame further includes fourth indication information, and the fourth indication information indicates a tolerable interference signal strength respectively corresponding to the at least one first STA; and

when the first AP allows the another AP to perform data transmission simultaneously with the first AP, if a target first STA exists, the another AP that performs data transmission simultaneously with the first AP does not perform data transmission on one or more sub-channels on which a resource unit RU corresponding to the target first STA is located, where an interference signal strength from the another AP to the target first STA is greater than a tolerable interference signal strength of the target first STA, the interference signal strength from the another AP to the target first STA is determined based on a transmit power of the another AP and a pathloss between the another AP and the target first STA, and the target first STA is one of the at least one first STA.

In a possible design, the transceiver unit is further configured to send the first frame to at least one AP when sending the first frame, where a coverage area respectively corresponding to the at least one AP overlaps with a coverage area of the first AP, and the another AP that performs data transmission simultaneously with the first AP is one of the at least one AP.

According to a fifth aspect, this application provides a data transmission apparatus. The apparatus is a second AP or a chip in the second AP. The apparatus includes:

A processing unit invokes a transceiver unit to receive a first frame from a first AP, where the first frame includes first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received; when the first AP separately sends data to at least one first STA, separately send data to K second STAs, where K is a positive integer; and receive a second acknowledgment frame by using a bandwidth other than the first bandwidth, where the second acknowledgment frame indicates whether data sent by the second AP is successfully received.

In a possible design, an end time for sending data by the second AP is the same as an end time for sending data by the first AP.

In a possible design, the transceiver unit is further configured to: after separately sending the data to the K second STAs, send a third frame, where the third frame is used to configure, for the K second STAs, a resource occupied for sending the second acknowledgment frame.

In a possible design, the first frame further includes third indication information, the third indication information indicates duration of a second frame, and the second frame is used to configure, for the at least one first STA, a resource occupied for sending the first acknowledgment frame; and duration for which the second AP sends the third frame is the same as the duration of the second frame.

In a possible design, a part or all of a resource occupied by the first AP for sending the data is used by the second AP to send the data.

In a possible design, the first frame further includes fourth indication information, and the fourth indication information indicates a tolerable interference signal strength respectively corresponding to the at least one first STA.

The processing unit is further configured to obtain a pathloss between each of the at least one first STA and the second AP; determine S first STAs from the at least one first STA based on the tolerable interference signal strength respectively corresponding to the at least one first STA, a transmit power of the second AP, and the pathloss between each of the at least one first STA and the second AP, where S is a positive integer, an interference signal strength from the second AP to a $t^{th}$ first STA in the S first STAs is greater than a tolerable interference signal strength of the $t^{th}$ first STA, the interference signal strength from the second AP to the $t^{th}$ second STA is determined based on the transmit power of the second AP and a pathloss between the $t^{th}$ first STA and the second AP, the $t^{th}$ first STA is one of the S first STAs, t is a positive integer, and t is less than or equal to S; and determine not to send the data on one or more sub-channels on which RUs respectively corresponding to the S first STAs are located.

In a possible design, the processing unit is configured to determine not to transmit a preamble on the one or more sub-channels.

In a possible design, the processing unit is further configured to obtain a pathloss between each of at least one second STA and the first AP, where the at least one second STA is a STA that the second AP expects to schedule; and determine the K second STAs from the at least one second STA based on a tolerable interference signal strength respectively corresponding to the at least one second STA, a transmit power of the first AP, and a pathloss between each of the at least one second STA and the first AP; and an interference signal strength from the first AP to a $k^{th}$ second STA in the K second STAs is not greater than a tolerable interference signal strength of the $k^{th}$ second STA, the interference signal strength from the first AP to the $k^{th}$ second STA is determined based on the transmit power of the first AP and a pathloss between the $k^{th}$ second STA and the first AP, the $k^{th}$ second STA is any one of the K second STAs, k is a positive integer, and k is less than or equal to K.

In a possible design, the transceiver unit is further configured to: after receiving the first frame from the first AP, receive a preamble sent by the first AP, where the preamble sent by the first AP indicates the resource occupied by the first AP for sending the data; the processing unit is further configured to start a backoff counter; and the transceiver unit is further configured to: when separately sending the data to the K second STAs, if the resource occupied by the first AP for sending the data is in an available state before the backoff counter ends, separately send the data to the K second STAs after the backoff counter ends.

In a possible design, that the resource occupied by the first AP for sending the data is in the available state means that the resource occupied by the first AP for sending the data is occupied, but a reserved resource is not occupied.

In a possible design, a size of the reserved resource is any one of 26 subcarriers, 52 subcarriers, or 106 subcarriers.

In a possible design, the resource occupied by the second AP for sending the data further includes the reserved resource, and the resource occupied by the first AP for sending the data does not include the reserved resource.

For technical effects of the fourth aspect and the fifth aspect, refer to the corresponding technical effects of the first aspect and the second aspect.

According to a sixth aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, respectively configured to implement the steps in the foregoing method. The function may be implemented by hardware, or may be implemented by executing corresponding software by hardware. The hardware or the software includes one or more units that correspond to the foregoing functions.

According to a seventh aspect, this application provides a computer-readable storage medium. The computer-readable storage medium stores a computer program; and when the computer program is run on an apparatus, the method in any one of the foregoing possible designs is performed.

According to an eighth aspect, this application provides a computer program product. The computer program product includes a computer program; and when the computer program is run on an apparatus, the method in any one of the foregoing possible designs is performed.

According to a ninth aspect, this application provides a communication system. The communication system includes a plurality of APs and a plurality of STAs, a first AP in the plurality of APs performs the method in any one of the possible designs of the first aspect, and a second AP in the plurality of APs performs the method in any one of the possible designs of the second aspect.

In this application, based on the implementations provided in the foregoing aspects, the implementations may be further combined to provide more implementations.

BRIEF DESCRIPTION OF DRAWINGS

FIG. 1 is a diagram of a network architecture of a WLAN to which embodiments of this application are applicable;
FIG. 2 is a diagram of a possible application scenario to which embodiments of this application are applicable;
FIG. 3 is a possible schematic flowchart of a data transmission method on a first AP side according to this application;
FIG. 4 is a diagram in which an AP1 and an AP2 simultaneously transmits data according to this application;
FIG. 5 is a diagram of a structure of a first frame according to this application;
FIG. 6 is a possible schematic flowchart of a data transmission method on a second AP side according to this application;
FIG. 7 is a first diagram in which a second AP determines a STA participating in data transmission and a resource that needs to be punctured according to this application;

FIG. 8 is a second diagram in which a second AP determines a STA participating in data transmission and a resource that needs to be punctured according to this application;

FIG. 9 is a diagram of resources respectively occupied by a first AP and a second AP for sending data according to this application;

FIG. 10 is a flowchart in which a first AP obtains a pathloss between the first AP and a first STA according to this application;

FIG. 11 is a diagram in which each AP measures a pathloss between the AP and a STA that is associated with the AP and each AP measures a pathloss between the AP and a STA that is not associated with the AP according to this application;

FIG. 12 is a diagram of exchanging broadcast frames between APs according to this application;

FIG. 13 is a diagram of a broadcast frame according to this application;

FIG. 14 is a diagram of a structure of a communication apparatus according to this application; and

FIG. 15 is a diagram of a structure of another communication apparatus according to this application.

DESCRIPTION OF EMBODIMENTS

In embodiments of this application, "at least one" means one or more, and "a plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may represent a, b, c, a and b, a and c, b and c, or a, b and c, and each of a, b, c may be an element, or may be a set including one or more elements.

In this application, "for example", "in some embodiments", "in some other embodiments", or the like is used to represent an example, an illustration, or a description. Any embodiment or design scheme described as an "example" in this application should not be explained as being more preferred or having more advantages than another embodiment or design scheme. Specifically, the term "example" is used to present a concept in a specific manner.

"Of (of)", "corresponding (corresponding, relevant)", and "corresponding (corresponding)" in this application may be interchangeably used sometimes. It should be noted that expressed meanings are the same when differences are not emphasized. In embodiments of this application, communication and transmission may be interchangeably used sometimes. It should be noted that expressed meanings are the same when differences are not emphasized. For example, transmission may include sending and/or receiving, and may be a noun or a verb.

It should be noted that in embodiments of this application, words such as "first" and "second" are merely used for purpose of distinguishing descriptions, and cannot be understood as an indication or implication of relative importance or an indication or implication of a sequence.

Embodiments of this application are applicable to a local area network (local area network, LAN), and in particular, to a wireless local area network (wireless local area network, WLAN). For example, embodiments of this application are applicable to a WLAN that uses any one of institute of electrical and electronics engineers (institute of electrical and electronics engineers, IEEE) 802.11 series protocols. The WLAN may include one or more basic service sets (basic service set, BSS). Network nodes in the basic service set include an access point (access point, AP) and a station (station, STA).

Embodiments of this application are also applicable to a wireless local area network like an internet of things (internet of things, IoT) network or a vehicle-to-everything (vehicle to X, V2X) network. Certainly, embodiments of this application are further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future evolved communication system.

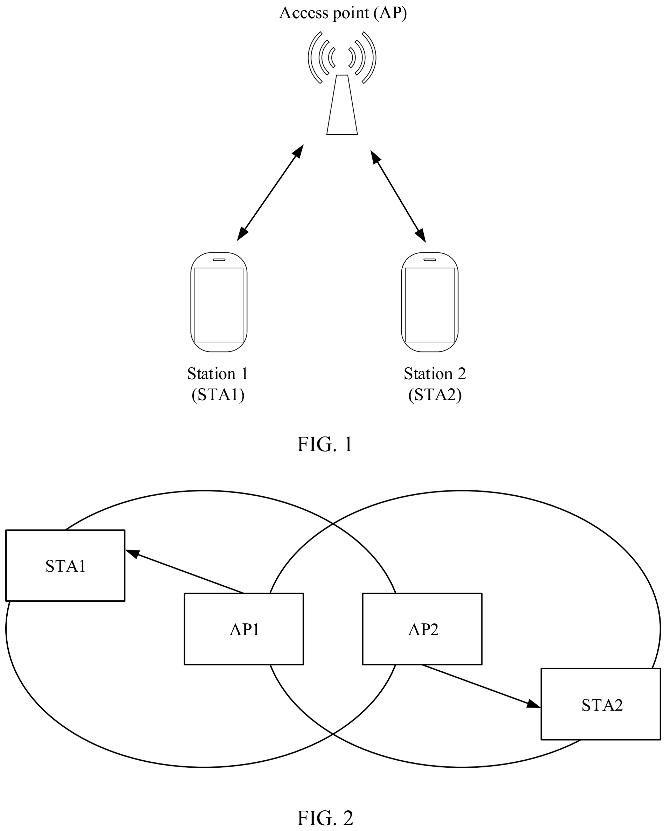

The following uses an example in which embodiments of this application are applicable to the WLAN. FIG. 1 is a diagram of a network architecture of a WLAN to which embodiments of this application are applicable. FIG. 1 uses an example in which the WLAN includes one AP and two STAs. The STA associated with the AP can receive a frame sent by the AP, and can also send a frame to the AP. Embodiments of this application are described by using communication between the AP and the STA as an example. It may be understood that embodiments of this application are also applicable to communication between APs. For example, the APs may communicate with each other through a distributed system (distributed system, DS). Embodiments of this application are also applicable to communication between STAs.

The AP may be an access point for a terminal device (for example, a mobile phone) to access a wired (or wireless) network. The AP is equivalent to a bridge that connects the wired network and the wireless network. A main function of the AP is to connect various wireless network clients together and then connect the wireless network to the Ethernet. For example, the AP may be a terminal device (for example, a mobile phone) or a network device (for example, a router) with a Wi-Fi chip. In embodiments of this application, the AP may be a device that supports the 802.11be standard, or may be a device that supports a plurality of WLAN standards of the 802.11 family, such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, and a computer that supports a Wi-Fi communication function. Optionally, the STA may support the 802.11be standard, or may support the plurality of WLAN standards of the 802.11 family, such as 802.11ax, 802.11ay, 802.11ac, 802.11n, 802.11g, 802.11b, 802.11a and the next generation of 802.11be.

It may be understood that quantities of APs and STAs shown in FIG. 1 are merely examples, and may be larger or smaller.

The following briefly describes two conventional Co-SR solutions.

Conventional solution 1:

It is assumed below that a coverage area of an AP 1 overlaps with a coverage area of an AP2. The AP1 allows another AP to perform data transmission simultaneously with the AP1. The AP1 may also be referred to as a sharing AP. The AP2 may perform data transmission simultaneously with the AP1. The AP2 may also be referred to as a shared AP. The AP1 and the AP2 may feed back received signal strength indication (received signal strength indication, RSSI) measurement reports to each other. The conventional solution 1 is divided into two phases: an interference measurement phase and a Co-SR transmission phase. The following separately describes the foregoing two phases.

Phase 1: Interference measurement phase

In the phase 1, the AP1 sends a buffer status report poll (buffer status report poll, BSRP) to an associated STA11, and the STA11 feeds back a trigger-based (trigger-based, TB) frame. In addition, the AP1 measures a signal strength of the TB frame sent by the STA11, to obtain an RSSIap1, and the AP2 measures a signal strength of the TB frame sent by the STA11, to obtain an RSSIap2. That the STA11 is associated with the AP1 may be understood as that the STA11 is within the coverage area of the AP1, and the STA11 can receive a frame sent by the AP1 and can also send a frame to the AP1.

Further, the AP1 sends a trigger (trigger) frame to the AP2, and the AP2 feeds back RSSIap2 to the AP1. For example, the AP2 may feed back a per-resource unit (Per-RU) RSSI measurement report to the AP1, where the report includes RSSIap2.

The AP1 calculates an interference level (interference level) from the AP2 to the STA11 when the AP1 communicates with the STA11. For example, the interference level from the AP2 to the STA11 may be determined based on a difference between RSSIap1 and RSSIap2.

Phase 2: Co-SR transmission solution

The AP1 sends a C-SR announcement (Announcement) frame. Meanings of C-SR and Co-SR are the same.

The C-SR announcement frame is used to initiate Co-SR transmission, and the frame may include the following information:

(1) Co-SR duration (duration) and bandwidth (bandwidth, BW).
(2) Transmit power (TxPower) of the AP1 and maximum TxPower allowed by the AP2, where the maximum TxPower allowed by the AP2 may be denoted as P1, and P1 is used to limit interference caused by the AP2 to a STA scheduled by the AP1.
(3) Tolerable maximum interference strength of the AP1.
The tolerable maximum interference strength of the AP1 may be denoted as R1, and R1 is used to limit a signal strength of a TB frame or a block acknowledgment (Block ACK, BA) frame returned by a STA associated with the AP2.
(4) Interference strength from the AP1 to the AP2.

The interference strength from the AP1 to the AP2 may be denoted as R2, and R2 is used as reference information for the AP2 to select a STA to be scheduled, that is, the AP2 may select, based on R2, a STA that can accept R2 to perform communication.

After receiving the C-SR announcement frame, the AP2 may ignore a network allocation vector (network allocation vector, NAV) of the AP1. If the AP2 detects clear channel assessment (clear channel assessment, CCA) idle (IDLE), the AP2 may communicate with the selected associated STA.

The AP2 may schedule downlink or uplink transmission, and the following constraints need to be met:

(1) A TxPower of the AP2 cannot exceed P1.

(2) If the AP2 performs uplink scheduling, when selecting a STA and an uplink (uplink, UL) modulation and coding scheme (modulation and coding scheme, MCS), the AP2 needs to consider the interference strength R2 from the AP1 to the AP2.

(3) The AP2 limits, by considering the tolerable maximum interference strength R1 of the AP1, a signal strength of a TB frame or a BA frame returned by the selected STA.

The foregoing conventional technical solution 1 mainly has the following several problems:

1. The AP1 needs to specify the AP2 by using the C-SR announcement frame. If the AP1 causes strong interference to a STA to be scheduled by the AP2, an opportunity of current Co-SR transmission may be wasted, that is, the AP2 may not find a STA that meets the foregoing constraints, and therefore does not initiate data transmission. However, for an AP that is not specified by the AP1, even if the AP has a STA suitable for scheduling, the AP has no opportunity to participate in the current Co-SR transmission.

2. Because the AP1 and the AP2 need to simultaneously receive BAs returned by STAs associated with the AP1 and the AP2, mutual interference may occur, and it is difficult for the AP2 to select a STA suitable for scheduling.

3. The foregoing conventional technical solution 1 does not consider downlink (downlink, DL) aggregated media access control (media access control, MAC) protocol data unit (aggregated MAC protocol data unit, AMPDU) transmission.

Conventional solution 2:

It is assumed below that a coverage area of an AP1 overlaps with a coverage area of an AP2. The AP1 allows another AP to perform data transmission simultaneously with the AP1. The AP1 may also be referred to as a sharing AP. The AP2 may perform data transmission simultaneously with the AP1. The AP2 may also be referred to as a shared AP. The conventional solution 2 is divided into two phases: a measurement phase and a transmission phase.

Phase 1: Measurement phase

The AP1 sends a measurement request to a STA11, to obtain RSSI information of an overlapping basic service set (overlapping basic service sets, OBSS) AP, and the STA11 feeds back a measurement report to the AP1. The AP1 is associated with the STA11.

For example, it is assumed that a coverage area of the AP1 overlaps with a coverage area of the AP2 and the coverage area of the AP1 overlaps with a coverage area of an AP3. The AP2 is associated with a STA21, and the AP3 is associated with a STA31. After receiving a measurement request sent by the AP1, the STA11 measures a signal strength when the AP2 sends data to the STA21, records the signal strength as RSSIap2, measures a signal strength when the AP3 sends data to the STA31, and records the signal strength as RSSIap3. The STA11 feeds back a measurement report to the AP1, where the measurement report includes RSSIap2 and RSSIap3.

Phase 2: Transmission phase

(1) After obtaining a transmission opportunity (transmission opportunity, TXOP) through contention, the AP1 first collects information about a candidate shared AP. For example, information about each candidate shared AP includes: (a) an association identifier (association identifier, aid) of a STA potentially scheduled by the candidate shared AP; and (b) a target signal to interference and noise ratio (signal to interference and noise ratio, SINR) of each STA in (a).

(2) The AP1 determines a selected shared AP based on the collected information about the candidate shared AP and the measurement report that is received in the phase 1.

In addition, the AP1 may further estimate an SINR of a STA to be scheduled by the AP1, and calculate a coordinated TxPower of each candidate shared AP.

The following uses an example in which the selected shared AP is the AP2 for description.

(3) The AP1 sends a trigger frame to the AP2, where the trigger frame indicates that Co-SR transmission is allowed, and the trigger frame may carry the following information: (a) a TxPower of the AP1; and (a) a coordinated TxPower of the AP2.

After the AP2 receives the trigger frame, the AP2 may schedule downlink or uplink transmission, and the following constraints need to be met:

(a) A TxPower of the AP2 cannot exceed the coordinated TxPower of the AP2.

(b) An optimal MCS is selected for a STA selected for scheduling.

The foregoing conventional technical solution 2 mainly has the following problems:

1. The AP1 needs to collect information about a candidate shared AP each time before Co-SR transmission is performed. Therefore, additional air interface overheads need to be generated for each time of scheduling.

2. The conventional solution 2 also has problems similar to those of the conventional solution 1: (1) The AP2 may waste an opportunity of current Co-SR transmission. (2) Because the AP1 and the AP2 need to simultaneously receive BAs returned by STAs associated with the AP1 and the AP2, mutual interference may occur, and it is difficult for the AP2 to select a STA suitable for scheduling. (3) The conventional solution 2 does not consider DL OFDMA transmission.

It may be understood that, with evolution of technologies, Co-SR may have another name. This is not limited in this application. The following embodiments of this application are applicable to a scenario in which at least two APs simultaneously perform data transmission, and coverage areas of the at least two APs overlap. The following uses only Co-SR as an example for description, and does not constitute a limitation on this application.

For example, as shown in FIG. 2, a coverage area of an AP1 overlaps with a coverage area of an AP2, STAs associated with the AP1 include a STA11 and a STA12, and STAs associated with the AP2 include a STA21 and a STA22. In a possible application scenario, when the AP1 separately sends data to the STA11 and the STA12 on a transmission resource, the AP2 may separately send data to the STA11 and/or the STA12 on the same transmission resource.

Based on the architecture of the network system shown in FIG. 1 and the content described in the foregoing related technologies, an embodiment of this application provides a data transmission method. An example in which the method is performed by an AP and a STA is used for description. For example, the AP may be the AP in FIG. 1. The STA may be any STA shown in FIG. 1. In addition, it should be understood that the AP may be alternatively replaced with a communication apparatus having an AP function, or a chip, a unit, or a module in the communication apparatus having the AP function. The STA may be alternatively replaced with a communication apparatus having a STA function, or a chip, a unit, or a module in the communication apparatus having the STA function.

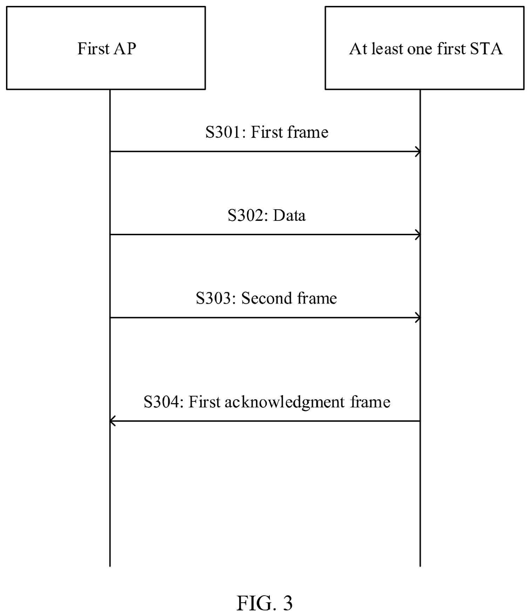

FIG. 3 shows an example of a possible schematic flowchart of a data transmission method according to an embodiment of this application. As shown in FIG. 3, the method includes the following steps.

S301: A first AP sends a first frame.

The first frame includes first indication information and second indication information. The first indication information indicates whether the first AP allows another AP to perform data transmission simultaneously with the first AP.

For example, that the first indication information indicates whether the first AP allows the another AP to perform data transmission simultaneously with the first AP may also be described as follows: The first indication information indicates the first AP to initiate coordinated spatial reuse transmission. In this case, the first indication information may also be referred to as a coordinated spatial reuse flag (Co-SR flag). For example, the first indication information may occupy one bit. When a value of the bit is 1, it indicates that the first AP allows the another AP to perform data transmission simultaneously with the first AP. When a value of the bit is 0, it indicates that the first AP does not allow the another AP to perform data transmission simultaneously with the first AP.

The second indication information indicates a first bandwidth, the first bandwidth is used by the first AP to receive a first acknowledgment frame, and the first acknowledgment frame indicates whether data sent by the first AP is successfully received. With reference to the following procedure, it can be learned that in S302 and S304, the first AP separately sends data to at least one STA, and a STA that receives the data may return a first acknowledgment frame to the first AP.

For example, the first bandwidth may be a contiguous bandwidth, or the first bandwidth may be a discrete bandwidth, that is, the first bandwidth may be a combination of a plurality of bandwidths. In a possible implementation, the second indication information includes a bitmap, and the bitmap indicates a bandwidth occupied by the first AP for receiving the first acknowledgment frame, that is, the first bandwidth.

For example, assuming that the bitmap includes eight bits and a maximum channel bandwidth is 160 M, each bit corresponds to 20 M. For any one of the eight bits, if the bit is set to 1, it indicates that 20 M corresponding to the bit is occupied.

For another example, assuming that the bitmap includes eight bits and a maximum bandwidth is 320 M, each bit corresponds to 40 M. For any one of the eight bits, if the bit is set to 1, it indicates that 40 M corresponding to the bit is occupied.

In the foregoing design, the first AP can notify, by using the second indication information, the AP that performs data transmission simultaneously with the first AP of the bandwidth occupied for receiving the first acknowledgment frame, so that the AP that performs data transmission simultaneously with the first AP receives a corresponding acknowledgment frame by using a bandwidth other than the first bandwidth, and a signal of the first acknowledgment frame is not interfered. In other words, when the first AP allows the another AP to perform data transmission simultaneously with the first AP, the another AP that performs data transmission simultaneously with the first AP receives the corresponding acknowledgment frame by using the bandwidth other than the first bandwidth, so that the bandwidth occupied by the first AP for receiving the first acknowledgment frame is different from the bandwidth occupied by the another AP for receiving the corresponding acknowledgment frame. Therefore, the signal of the first acknowledgment frame is not interfered, and receiving reliability of the first acknowledgment frame is improved.

For example, the first frame may be a multi-user request to send (multi-user request to send, MU-RTS) frame. It may be understood that the first frame may further include other content. For details, refer to the following related descriptions.

In addition, after the first AP sends the first frame, the first AP receives a clear to send (clear to send, CTS) frame from the at least one STA.

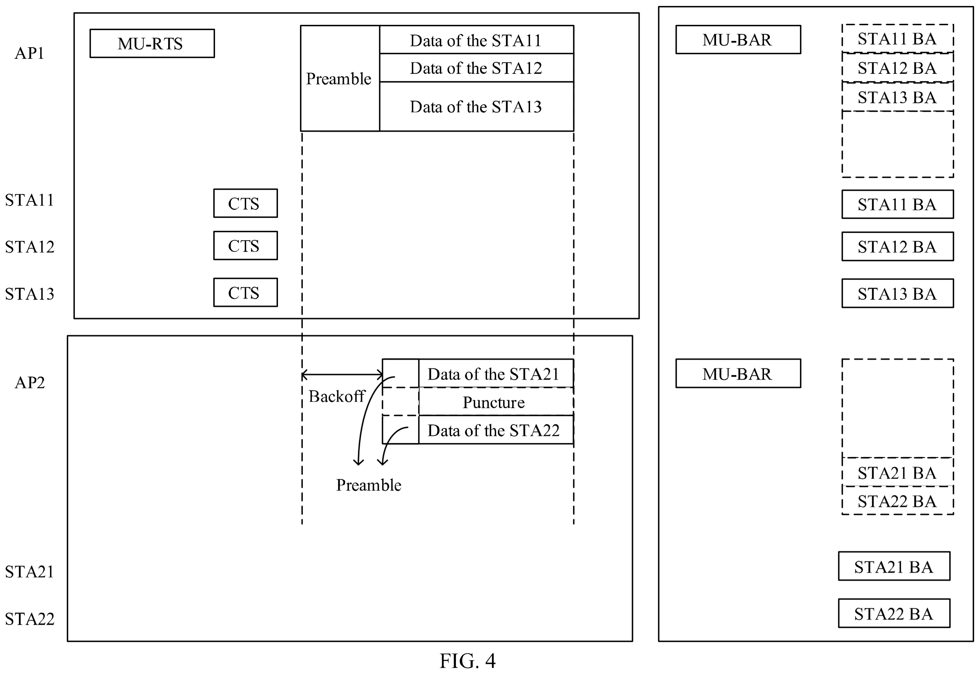

For example, as shown in FIG. 4, a STA11, a STA12, and a STA13 are STAs associated with an AP1. After the AP1 sends an MU-RTS, the STA11, the STA12, and the STA13 separately send a CTS.

It may be understood that the first AP sends the first frame, and correspondingly, at least one AP and at least one first STA receive the first frame. A coverage area respectively corresponding to the at least one AP overlaps with a coverage area of the first AP. In a possible implementation, the first AP sends the first frame to the at least one AP, and the another AP that performs data transmission simultaneously with the first AP is one of the at least one AP.

For example, it is assumed that both a coverage area of a second AP and a coverage area of a third AP overlap with the coverage area of the first AP, both the second AP and the third AP may receive the first frame, the second AP or the third AP may perform data transmission simultaneously with the first AP, and the first AP does not specify an AP that performs data transmission simultaneously with the first AP, and does not need to collect related information of an AP that may participate in performing data transmission simultaneously with the first AP. For how the AP that receives the first frame determines whether to participate in performing data transmission simultaneously with the first AP, refer to related content in S602.

S302: The first AP separately sends data to the at least one first STA.

For example, when the first AP allows the another AP to perform data transmission simultaneously with the first AP, an end time for sending data by the another AP that performs data transmission simultaneously with the first AP may be the same as an end time for sending data by the first AP.

For example, when the first AP allows the another AP to perform data transmission simultaneously with the first AP, a part or all of a resource occupied by the first AP for sending the data may be used by the another AP that performs data transmission simultaneously with the first AP to send the data, that is, the first AP may share, with the another AP, the resource used by the first AP for data transmission.

S303: The first AP sends a second frame. The second frame is used to configure, for the at least one first STA, a resource occupied for sending the first acknowledgment frame.

For example, the second frame is a multi-user block acknowledgment request frame block acknowledgment request (multi-user block acknowledgement request, MU-BAR).

It should be noted that the first bandwidth is used by the first AP to receive the first acknowledgment frame, or in other words, the first bandwidth is a bandwidth occupied for the first acknowledgment frame. The second frame may be used to configure, for the at least one first STA, the resource occupied for sending the first acknowledgment frame, that is, the second frame may be used to allocate a bandwidth occupied by each of at least one acknowledgment frame. The at least one acknowledgment frame is in one-to-one correspondence with the at least one first STA, and the bandwidth occupied by each of the at least one acknowledgment frame belongs to the first bandwidth.

It may be understood that, the first bandwidth does not conflict with the bandwidth occupied by each of the at least one acknowledgment frame. For example, assuming that a maximum channel bandwidth is 160 M, and a total of eight sub-channels of 20 M are included, and the eight sub-channels are numbered in ascending order of frequencies, and are respectively 0, 1, 2, ..., and 7, the first bandwidth may include sub-channels numbered 0, 1, 2, and 3, and the bandwidth occupied for the acknowledgment frame may be selected from the sub-channels numbered 0, 1, 2, and 3. For example, a number of a sub-channel included in the bandwidth occupied for the acknowledgment frame is any one of {0, 1, 2, 3, (0, 1), (2, 3), (0, 1, 2, 3)}.

In a possible design, the first frame may further include third indication information, and the third indication information indicates duration of the second frame. When the first AP allows the another AP to perform data transmission simultaneously with the first AP, duration for which the another AP that performs data transmission simultaneously with the first AP sends a frame of a same type as the second frame may be the same as the duration of the second frame.

Further, if the end time for sending the data by the another AP that performs data transmission simultaneously with the first AP is the same as the end time for sending the data by the first AP, and the duration for which the another AP that performs data transmission simultaneously with the first AP sends the frame of the same type as the second frame is the same as the duration of the second frame, a start time of the first acknowledgment frame may be aligned with a start time of another acknowledgment frame, where the another acknowledgment frame is an acknowledgment frame received by the another AP that performs data transmission simultaneously with the first AP.

For example, as shown in FIG. 4, the STA11, the STA12, and the STA13 are the STAs associated with the AP1, and a STA21 and a STA22 are STAs associated with an AP2. An end time for sending data by the AP1 is the same as an end time for sending data by the AP2, a start time for sending a MU-BAR by the AP1 is the same as a start time for sending a MU-BAR by the AP2, and a start time for sending a BA by each of the STA11, the STA12, and the STA13 is the same as a start time for sending a BA by each of the STA21 and the STA22.

S304: The at least one first STA separately sends the first acknowledgment frame to the first AP.

For example, as shown in FIG. 4, the STA11, the STA12, and the STA13 are the STAs associated with the AP1, and the STA21 and the STA22 are the STAs associated with the AP2. Bandwidths occupied by the STA11, the STA12, and the STA13 for separately sending the BA are different from bandwidths occupied by the STA21 and the STA22 for separately sending the BA.

In addition, the first frame may further include fourth indication information, and the fourth indication information indicates a tolerable interference signal strength respectively corresponding to the at least one first STA. The AP that performs data transmission simultaneously with the first AP may determine specific unavailable transmission resources based on the tolerable interference signal strength respectively corresponding to the at least one first STA.

The tolerable interference signal strength (tolerable interference RSSI) of each first STA is determined based on at least one of a transmit power of the first AP, a pathloss between the first AP and the first STA, an SINR of an MCS corresponding to the first STA, and a first noise signal strength.

For example, assuming that a target signal strength from the first AP to the first STA is $RSSI\_mw_{target}$ (unit: milliwatt mW), the target signal strength $RSSI\_mw_{target}$ may be calculated based on the transmit power of the first AP and the pathloss between the first AP and the first STA. For example, $RSSI\_mw_{target}$ is determined based on a difference between the transmit power of the first AP and the pathloss between the first AP and the first STA. The SINR of the MCS corresponding to the first STA is $SINR\_ratio_{target\_MCS}$, and $SINR_{target\_MCS}$ may be obtained based on a receiver sensitivity indicator of an expected MCS. The first noise signal strength is $Noise\_mw$ (unit: mW), and the first noise signal strength is usually a constant.

The tolerable interference signal strength is $RSSI\_mw_{tolerable\_interf}$ (unit: mW). The following relational expression is satisfied:

$$\frac{RSSI\_mw_{target}}{RSSI\_mw_{tolerable\_interf} + Noise\_mw} > SINR\_ratio_{target\_MCS}$$

According to the relational expression, the following may be deduced:

$$RSSI\_mw_{tolerable\_interf} < \frac{RSSI\_mw_{target}}{SINR\_ratio_{target\_MCS}} - Noise\_mw$$

The target signal strength, the interference signal strength, and the noise signal strength in the unit of mW are converted into those in the unit of dBm. The tolerable interference signal strength (unit: dBm) may be obtained and satisfies the following condition:

$$RSSI_{tolerable\_interf} < 10 \times log\left(\frac{10^{\frac{RSSI_{target}}{10}}}{10^{\frac{SINR_{target\_MCS}}{10}}} - 10^{\frac{Noise}{10}}\right)$$

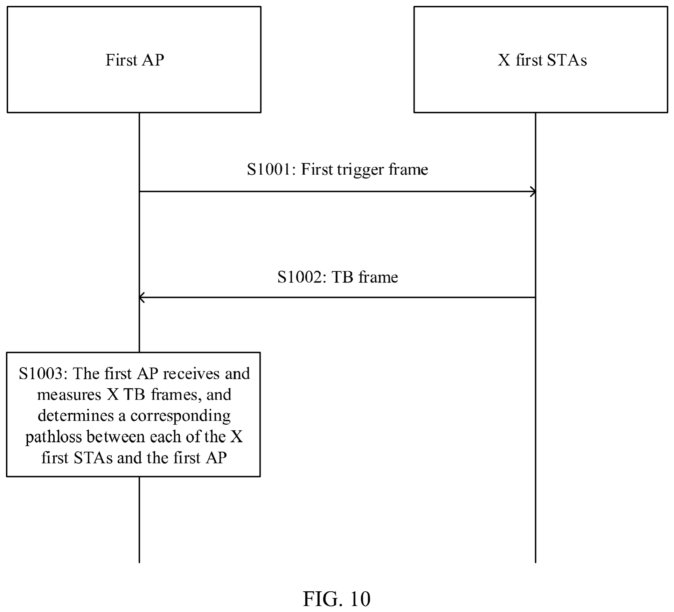

It may be understood that the foregoing manner of calculating the tolerable interference signal strength is merely an example, and is not intended to limit this application. The pathloss between the first AP and the first STA may be obtained with reference to the following process shown in FIG. 10.

In a possible design, when the first AP allows the another AP to perform data transmission simultaneously with the first AP, the another AP that performs data transmission simultaneously with the first AP needs to determine, based on the fourth indication information, whether an interference signal strength from the another AP to each of the at least one first STA is greater than the tolerable interference signal strength of the corresponding first STA. If a target first STA exists, where the target first STA is one of the at least one first STA, and an interference signal strength from the another AP to the target first STA is greater than a tolerable interference signal strength of the target first STA, the another AP does not perform data transmission on one or more sub-channels on which a resource unit (resource unit, RU) corresponding to the target first STA is located. An interference signal strength from the another AP to the target first STA is determined based on a transmit power of the another AP and a pathloss between the another AP and the target first STA. For details, refer to the following related description in S602.

Further, optionally, the another AP does not transmit a preamble on the one or more sub-channels.

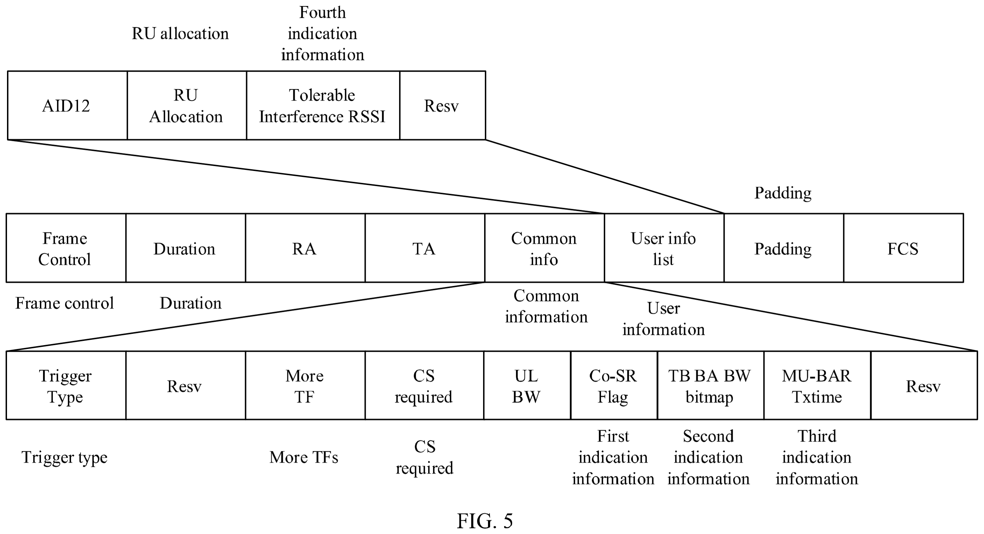

For example, as shown in FIG. 5, at least one of the first indication information, the second indication information, and the third indication information may be carried in a common information (common info) field in a MU-RTS, and the fourth indication information is carried in a user information (user info) field in the MU-RTS. The first indication information may occupy one bit, the second indication information may occupy eight bits, the third indication information may occupy eight bits, and the fourth indication information may occupy eight bits. For specific meanings of other fields, refer to related descriptions of an existing MU-RTS. Details are not described herein. It should be noted that a size of bits occupied by each piece of indication information is merely an example, and is not intended to limit this application.

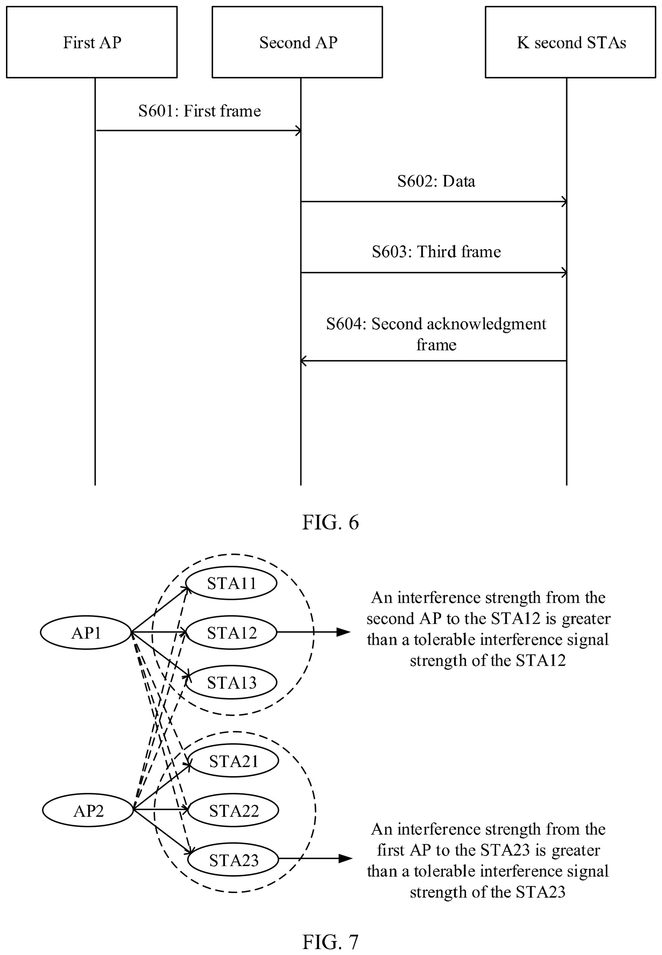

FIG. 6 shows an example of a possible schematic flowchart of a data transmission method according to an embodiment of this application. In the embodiment shown in FIG. 6, a second AP and a first AP in the embodiment shown in FIG. 5 perform data transmission simultaneously. As shown in FIG. 6, the method includes the following steps.

S601: The second AP receives a first frame from the first AP.

For related descriptions of the first frame, refer to S301.

S602: The second AP separately sends data to K second STAs, where K is a positive integer.

A start time for sending data by the second AP may be different from a start time for sending data by the first AP, but an end time for sending the data by the second AP is not later than an end time for sending the data by the first AP. For example, the end time for sending the data by the second AP may be equal to the end time for sending the data by the first AP.

For example, the second AP may receive and parse a preamble sent by the first AP, and then determine, based on a parsing result of the preamble, the end time for sending the data by the first AP, so that the second AP may determine that the end time for sending the data by the second AP is not later than the end time for sending the data by the first AP.

Before the second AP separately sends the data to the K second STAs, the second AP further needs to perform the following operations:

(1) Determine a STA participating in data transmission (that is, determine the K second STAs).

For example, the second AP obtains a pathloss between each of at least one second STA and the first AP, where the at least one second STA is a STA that the second AP expects to schedule, and is also referred to as a candidate scheduled STA of the second AP. For how the second AP obtains the pathloss between each of the at least one second STA and the first AP, refer to the following embodiment shown in FIG. 10.

The second AP determines the K second STAs from the at least one second STA based on a tolerable interference signal strength respectively corresponding to the at least one second STA, a transmit power of the first AP, and the pathloss between each of the at least one second STA and the first AP. A tolerable interference signal strength of each second STA is determined based on at least one of a transmit power of the second AP, a pathloss between the second AP and the second STA, an SINR of an MCS corresponding to the second STA, and a second noise signal strength. A first noise signal strength and the second noise signal strength may be the same or may be different. This is not limited in this application. A manner of calculating the tolerable interference signal strength respectively corresponding to the at least one second STA is similar to a manner of calculating a tolerable interference signal strength respectively corresponding to at least one first STA. For details, refer to the foregoing formula. Details are not described herein again.

Specifically, for each second STA in the at least one second STA, the second AP calculates an interference strength from the first AP to the second STA. For example, the interference strength from the first AP to the second STA is determined based on a transmit power of the first AP and a pathloss between the second STA and the first AP. For example, the interference strength from the first AP to the second STA may be determined based on a difference between the transmit power of the first AP and the pathloss between the second STA and the first AP.

Then, the second AP determines whether the interference strength from the first AP to the second STA is less than or equal to a tolerable interference signal strength of the second STA. If the interference strength from the first AP to the second STA is less than or equal to the tolerable interference signal strength of the second STA, the second STA is a second STA finally scheduled by the second AP, that is, a STA participating in data transmission. If the interference strength from the first AP to the second STA is not less than or equal to the tolerable interference signal strength of the second STA, the second AP does not schedule the second STA. In other words, when the interference strength from the first AP to the second STA is less than or equal to the tolerable interference signal strength of the second STA, the interference strength from the first AP to the second STA is small, and the second STA is a second STA suitable for scheduling by the second AP. When the interference strength from the first AP to the second STA is greater than the tolerable interference signal strength of the second STA, the interference strength from the first AP to the second STA is large, and the second STA is a second STA that is not suitable for scheduling by the second AP.

By using the foregoing process, the second AP may determine the K second STAs, that is, K second STAs suitable for scheduling, where the K second STAs are a part or all of the at least one second STA. An interference signal strength from the first AP to a $k^{th}$ second STA in the K second STAs is not greater than a tolerable interference signal strength of the $k^{th}$ second STA, the interference signal strength from the first AP to the $k^{th}$ second STA is determined based on the transmit power of the first AP and a pathloss between the $k^{th}$ second STA and the first AP, the $k^{th}$ second STA is any one of the K second STAs, k is a positive integer, and k is less than or equal to K.

For example, second STAs that the second AP expects to schedule include a STA21, a STA22, and a STA23. The second AP calculates an interference strength from the first AP to the STA21, an interference strength from the first AP to the STA22, and an interference strength from the first AP to the STA23, where the interference strength from the first AP to the STA21 may be determined based on a difference between the transmit power of the first AP and a pathloss between the STA21 and the first AP. The interference strength from the first AP to the STA22 and the interference strength from the first AP to the STA23 are similar to the interference strength from the first AP to the STA21. Details are not described again.

Further, the second AP determines whether the interference strength from the first AP to the STA21 is less than or equal to a tolerable interference signal strength of the STA21. If the interference strength from the first AP to the STA21 is less than or equal to the tolerable interference signal strength of the STA21, the STA21 is a STA suitable for scheduling. If the interference strength from the first AP to the STA21 is not less than or equal to the tolerable interference signal strength of the STA21, the second AP does not schedule the STA21. Similarly, it is determined whether the interference strength from the first AP to the STA22 is less than or equal to a tolerable interference signal strength of the STA22, and whether the interference strength from the first AP to the STA23 is less than or equal to a tolerable interference signal strength of the STA23.

As shown in FIG. 7, if the second AP determines that the interference strength from the first AP to the STA23 is greater than the tolerable interference signal strength of the STA23, the second AP does not schedule the STA23. If the second AP determines that the interference strength from the first AP to the STA21 is less than or equal to the tolerable interference signal strength of the STA21, and the interference strength from the first AP to the STA22 is less than or equal to the tolerable interference signal strength of the STA22, the second AP determines to schedule the STA21 and the STA22.

In addition, it may be understood that, if the second AP determines that there is no second STA suitable for scheduling, the second AP determines not to participate in performing data transmission simultaneously with the first AP.

(2) Determine whether there is a first STA whose interference signal strength is greater than a tolerable interference signal strength (that is, determine whether a resource occupied by the first AP for sending data needs to be punctured).

First, the second AP obtains a pathloss between each of the at least one first STA and the second AP. For how the second AP obtains the pathloss between each of the at least one second STA and the first AP, refer to the following embodiment shown in FIG. 10.

Then, the second AP determines S first STAs from the at least one first STA based on the tolerable interference signal strength respectively corresponding to the at least one first STA, the transmit power of the second AP, and the pathloss between each of the at least one first STA and the second AP, where S is a positive integer.

For example, the second AP may determine the transmit power of the second AP with reference to a plurality of factors such as the tolerable interference signal strength respectively corresponding to the at least one first STA and the STA that the second AP expects to schedule. In this application, the second AP may not need to enable the transmit power of the second AP to be low to meet the tolerable interference signal strength respectively corresponding to the at least one first STA. In other words, the second AP may puncture the resource occupied by the first AP for sending the data, to ensure that the transmit power of the second AP is at a high level, thereby improving quality of communication with the STA that the second AP expects to schedule.

In addition, the second AP may not determine, from the at least one first STA, the first STA whose interference signal strength is greater than the tolerable interference signal strength. In this case, the second AP does not need to puncture the resource occupied by the first AP for sending the data.

The first frame further includes fourth indication information, and the fourth indication information indicates the tolerable interference signal strength respectively corresponding to the at least one first STA. An interference signal strength from the second AP to a $t^{th}$ first STA in the S first STAs is greater than a tolerable interference signal strength of the $t^{th}$ first STA, the interference signal strength from the second AP to the $t^{th}$ second STA is determined based on the transmit power of the second AP and a pathloss between the $t^{th}$ first STA and the second AP, the $t^{th}$ first STA is one of the S first STAs, t is a positive integer, and t is less than or equal to S.

It can be learned that, after receiving the first frame, the second AP may further receive a preamble sent by the first AP. The preamble indicates the resource occupied by the first AP for sending the data, and a part or all of the resource occupied by the first AP for sending the data may be used by the second AP to send the data. The second AP may learn of, by parsing the preamble, the resource occupied by the first AP for sending the data. Specifically, the second AP may learn of one or more sub-channels on which an RU corresponding to each of the at least one first STA is located.

Further, the second AP may not send the data on one or more sub-channels on which RUs respectively corresponding to the S first STAs are located. Alternatively, it may be described as follows: The second AP sends the data on a resource, in the resource occupied by the first AP for sending the data, other than the one or more sub-channels on which the RUs respectively corresponding to the S first STAs are located. In other words, the one or more sub-channels on which the RUs respectively corresponding to the S first STAs are located are a resource, in the resource occupied by the first AP for sending the data, that is not used by the second AP to send the data. The resource, in the resource occupied by the first AP for sending the data, other than the one or more sub-channels on which the RUs respectively corresponding to the S first STAs are located is a resource that can be used by the second AP to send the data.

In addition, the second AP does not transmit a preamble on the one or more sub-channels on which the RUs respectively corresponding to the S first STAs are located.

The following describes how to determine a specific resource, in the resource occupied by the first AP for sending the data, that can be used by the second AP to send the data.

After the second AP obtains the pathloss between each of the at least one first STA and the second AP, for each first STA in the at least one first STA, the second AP calculates an interference strength from the second AP to the first STA. For example, the interference strength from the second AP to the first STA is determined based on the transmit power of the second AP and a pathloss between the first STA and the second AP. For example, the interference strength from the second AP to the first STA may be determined based on a difference between the transmit power of the second AP and the pathloss between the first STA and the second AP.

Then, the second AP determines whether the interference strength from the second AP to the first STA is greater than a tolerable interference signal strength of the first STA. If the interference strength from the second AP to the first STA is greater than the tolerable interference signal strength of the first STA, there is a first STA whose interference signal strength is greater than the tolerable interference signal strength. One or more sub-channels on which an RU corresponding to the first STA is located cannot be used by the second AP to send data. Alternatively, it is described as follows: One or more sub-channels on which an RU corresponding to the first STA is located are punctured. If the interference strength from the second AP to the first STA is not greater than the tolerable interference signal strength of the first STA, one or more sub-channels on which an RU corresponding to the first STA is located can be used by the second AP to send data.

In other words, when the interference strength from the second AP to the first STA is greater than the tolerable interference signal strength of the first STA, the interference strength from the second AP to the first STA is large. To ensure reliability of sending the data by the first AP to the first STA, the second AP does not occupy the one or more sub-channels on which the RU corresponding to the first STA is located to send the data. When the interference strength from the second AP to the first STA is less than or equal to the tolerable interference signal strength of the first STA, the one or more sub-channels on which the RU corresponding to the first STA is located may be reused, that is, the second AP can occupy the one or more sub-channels on which the RU corresponding to the first STA is located to send the data.

It may be understood that, after the second AP learns that the second AP does not send the data on the one or more sub-channels on which the RUs respectively corresponding to the S first STAs are located, the second AP may separately allocate, to the K second STAs based on the resource, in the resource occupied by the first AP for sending the data, other than the one or more sub-channels on which the RUs respectively corresponding to the S first STAs are located, a resource occupied for transmitting data, and determine a corresponding MCS.

For example, first STAs scheduled by the first AP include a STA11, a STA12, and a STA13. The second AP calculates an interference strength from the second AP to the STA11, an interference strength from the second AP to the STA12, and an interference strength from the second AP to the STA13. The interference strength from the second AP to the STA11 may be determined based on a difference between the transmit power of the second AP and a pathloss between the STA11 and the second AP. The interference strength from the second AP to the STA 12 and the interference strength from the second AP to the STA13 are similar to the interference strength from the second AP to the STA11. Details are not described again.

Further, the second AP determines whether the interference strength from the second AP to the STA11 is greater than a tolerable interference signal strength of the STA11. If the interference strength from the second AP to the STA11 is greater than the tolerable interference signal strength of the STA11, one or more sub-channels on which an RU corresponding to the STA11 is located are not used by the second AP to send the data. If the interference strength from the second AP to the STA11 is not greater than the tolerable interference signal strength of the STA11, one or more sub-channels on which an RU corresponding to the STA11 is located can be used by the second AP to send the data. Similarly, it is determined whether the interference strength from the second AP to the STA12 is greater than a tolerable interference signal strength of the STA12, and whether the interference strength from the second AP to the STA13 is greater than a tolerable interference signal strength of the STA13.

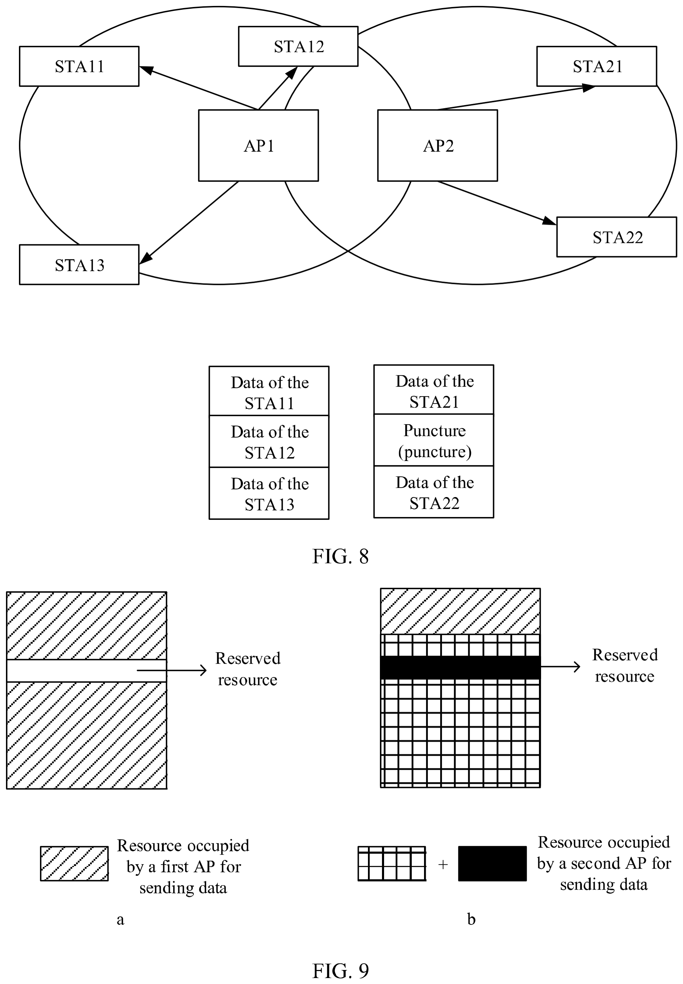

As shown in FIG. 7 and FIG. 8, the second AP determines that the interference strength from the second AP to the STA12 is greater than the tolerable interference signal strength of the STA12, the interference strength from the second AP to the STA12 is less than or equal to the tolerable interference signal strength of the STA12, and the interference strength from the second AP to the STA13 is less than or equal to the tolerable interference signal strength of the STA13. In this case, it is determined that one or more sub-channels on which an RU corresponding to the STA12 is located are not used by the second AP to send the data, and one or more sub-channels on which an RU corresponding to the STA11 is located and one or more sub-channels on which an RU corresponding to the STA13 is located can be used by the second AP to send the data.

In addition, it may be understood that, if the second AP determines that the interference strength to the at least one first STA is greater than the corresponding tolerable interference signal strength, the second AP determines not to participate in performing data transmission simultaneously with the first AP. The second AP may alternatively determine that the interference strength to the at least one first STA is less than or equal to the corresponding tolerable interference signal strength, that is, the second AP determines that there is no first STA whose interference signal strength is greater than the tolerable interference signal strength.

It should be noted that the foregoing (1) and (2) are merely examples, and are not intended to limit this application.

In a possible implementation, after the second AP receives the preamble sent by the first AP, the second AP starts a backoff counter. If the resource occupied by the first AP for sending the data is in an available state before the backoff counter ends, the second AP separately sends the data to the K second STAs after the backoff counter ends.

That the resource occupied by the first AP for sending the data is in the available state means that the resource occupied by the first AP for sending the data is occupied, but a reserved resource is not occupied. That the resource occupied by the first AP for sending the data is in an unavailable state means that the resource occupied by the first AP for sending the data is occupied, and the reserved resource is also occupied. For example, a size of the reserved resource is any one of 26 subcarriers, 52 subcarriers, or 106 subcarriers. If the second AP separately sends the data to the K second STAs, in addition to a part or all of the resource occupied by the first AP for sending the data, the resource occupied by the second AP for sending the data further needs to include the reserved resource, and the resource occupied by the first AP for sending the data does not include the reserved resource. In the foregoing design, when detecting that the resource occupied by the first AP for sending the data is in the unavailable state, an AP that expects to participate in performing data transmission simultaneously with the first AP can give up participating in performing data transmission simultaneously with the first AP, so that a plurality of APs do not participate in performing data transmission simultaneously with the first AP.

For example, a in FIG. 9 shows the resource occupied by the first AP for sending the data, and b in FIG. 9 shows the resource occupied by the second AP for sending the data. The reserved resource is marked in black, indicating that the reserved resource is occupied. The reserved resource is marked in white, indicating that the reserved resource is not occupied.

It should be noted that, if the second AP determines that there is no second STA suitable for scheduling, and/or the second AP determines that the interference strength from the second AP to the at least one first STA is greater than the corresponding tolerable interference signal strength, the second AP determines not to participate in performing data transmission simultaneously with the first AP. For details, refer to related descriptions in the foregoing (1) and (2).

If the second AP determines the STA participating in data transmission and the interference strength from the second AP to the at least one first STA is not all greater than the corresponding tolerable interference signal strength, it indicates that the second AP expects to participate in performing data transmission simultaneously with the first AP, but it does not indicate that the second AP can definitely participate in performing data transmission simultaneously with the first AP. In other words, there may be N APs that receive the first frame, and therefore, there may be M APs in the N APs that all expect to participate in performing data transmission simultaneously with the first AP. N and M are integers greater than or equal to 2, and M≤N.

In this case, all the M APs may receive the preamble sent by the first AP, and start a corresponding backoff counter. In this case, only an AP whose backoff counter ends first in the M APs can participate in performing data transmission simultaneously with the first AP.

For example, both the second AP and a third AP receive the first frame. If both the second AP and the third AP expect to participate in performing data transmission simultaneously with the first AP, the second AP and the third AP receive the preamble sent by the first AP, and start a respective backoff counter. Generally, a value of the backoff counter of the second AP is different from a value of the backoff counter of the third AP. When the backoff counter of the second AP ends first, the second AP may participate in performing data transmission simultaneously with the first AP, that is, the second AP sends data to the determined STA participating in data transmission. The second AP needs to occupy the reserved resource to send the data.

When the backoff counter ends, the third AP determines that the resource occupied by the first AP for sending the data is in the unavailable state, that is, the resource occupied by the first AP for sending the data is occupied, and the reserved resource is also occupied. In this case, the third AP determines that participation fails, and does not send data.

Similarly, when the backoff counter of the third AP first ends, the third AP may participate in performing data transmission simultaneously with the first AP, that is, the third AP sends data to the determined STA participating in data transmission.

In the foregoing design, the first AP does not specify an AP that performs data transmission simultaneously with the first AP, and does not need to collect related information of an AP that may participate in performing data transmission simultaneously with the first AP. Each AP that receives the first frame independently determines whether the AP expects to participate in performing data transmission simultaneously with the first AP, so that only an AP whose backoff counter ends first in a plurality of APs that expect to participate in performing data transmission simultaneously with the first AP can participate in performing data transmission simultaneously with the first AP.

S603: The second AP sends a third frame.

The third frame is used to configure, for the K second STAs, a resource occupied for sending a second acknowledgment frame. Duration for which the second AP sends the third frame is the same as duration for which the first AP sends the second frame. For example, the first frame further includes third indication information, and the third indication information indicates the duration of the second frame. Therefore, the second AP may determine the duration of the second frame based on the third indication information in the first frame, and send the third frame based on the duration.

S604: The K second STAs separately send a second acknowledgment frame, and correspondingly, the second AP receives the second acknowledgment frame, where the second AP receives the second acknowledgment frame by using a bandwidth other than the first bandwidth. The second acknowledgment frame indicates whether data sent by the second AP is successfully received. The K second STAs are in one-to-one correspondence with K second acknowledgment frames, and the bandwidth occupied by the K second acknowledgment frames is different from the first bandwidth, or it is described as that the bandwidth occupied by the K second acknowledgment frames does not overlap with the first bandwidth.

It can be learned that because the bandwidth occupied by the K second acknowledgment frames does not overlap with the first bandwidth, receiving of the first acknowledgment frame by the first AP and receiving of the second acknowledgment frame by the second AP do not interfere with each other.

For example, the second indication information includes a bitmap. The first AP allocates, only in a bandwidth indicated by a part whose value is 1 in the bitmap, an RU to the at least one scheduled first STA for returning the first acknowledgment frame, and the second AP allocates, only in a bandwidth indicated by a part whose value is 0 in the bitmap, an RU to the scheduled K second STAs for returning the second acknowledgment frame.

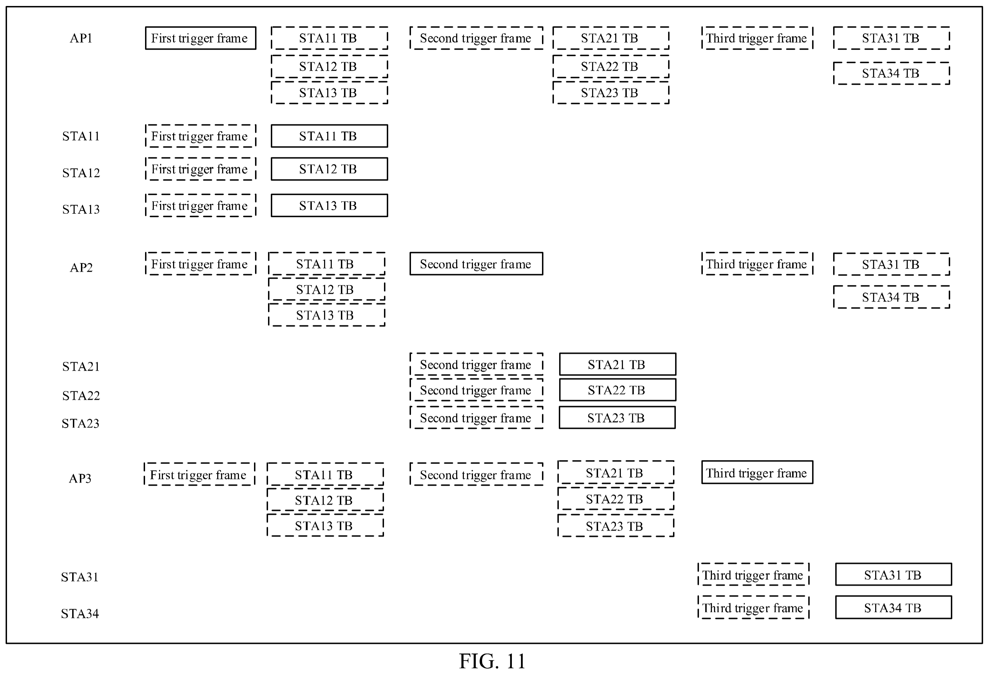

As shown in FIG. 10 and FIG. 11, it is assumed that coverage areas of the first AP, the second AP, and the third AP overlap. The following describes a specific process in which each AP measures a pathloss between the AP and a STA that is associated with the AP and each AP measures a pathloss between the AP and a STA that is not associated with the AP.

S1001: The first AP sends a first trigger frame. Correspondingly, X first STAs receive the first trigger frame. The X first STAs are associated with the first AP. X is a positive integer.

The first trigger frame may also be referred to as a pathloss measurement trigger frame. A type of the trigger frame may be a type of a newly added trigger frame. A name of the type of the newly added trigger frame may be pathloss measurement report poll (pathloss measurement report poll, PMRP). In addition, another name may be used. This is not limited in this application.

S1002: The X first STAs returns a TB frame on a specified RU.

Each TB frame may also be referred to as a pathloss measurement TB frame. Each TB frame may include a transmit power of a first STA that sends the TB frame. For example, the transmit power of the first STA may occupy eight bits. The transmit power of the first STA may be carried in a high-throughput control (high-throughput control, HTC) field in a trigger-based quality of service null data (trigger-based quality of service null data, TB QoS Null Data) frame. A control (Control) ID of the HTC field may be a newly added control ID, and a name of the newly added control ID may be a pathloss measurement report (pathloss measurement report, PMR). In addition, another name may be used. This is not limited in this application.

For example, a STA11 is a STA associated with the first AP, and a TB frame returned by the STA11 may include a transmit power sta11_txpower of the STA11. The STA11 is any one of the X first STAs.

S1003: The first AP receives and measures X TB frames, and determines a corresponding pathloss between each of the X first STAs and the first AP. The X TB frames are in one-to-one correspondence with the X first STAs.

For example, the STA11 is the STA associated with the first AP. The first AP measures the TB frame returned by the STA11, where a signal strength of the TB frame returned by the STA11 is sta11_ap1_rssi, calculates a pathloss sta11_ap1_pathloss=sta11_txpower-sta11_ap1_rssi, and stores the pathloss in a local BSS STA pathloss table. The first AP may be indicated by ap1.

The following Table 1 shows a pathloss table of the X first STAs stored in the first AP, which may also be referred to as a local BSS pathloss table. For example, X=3, and the X first STAs are: the STA11, a STA12, and a STA13.

Table 1

| Local BSS STA MAC address | Pathloss (Pathloss) |
|---|---|
| STA11_addr | 15 dB |
| STA12_addr | 10 dB |
| STA13_addr | 40 dB |

Similarly, the second AP may also send a second trigger frame, and Y second STAs receive the second trigger frame. Y second STAs are associated with the second AP, and Y is a positive integer. The Y second STAs returns a TB frame on a specified RU. The second AP receives and measures Y TB frames, and determines a corresponding pathloss between each of the Y second STAs and the second AP. The Y TB frames are in one-to-one correspondence with the Y second STAs, so that the second AP may obtain a local BSS pathloss table, as shown in Table 2. Similarly, the third AP may obtain a local BSS pathloss table, as shown in Table 3.

Table 2

| Local BSS STA MAC address | Pathloss (Pathloss) |
|---|---|
| STA21_addr | 18 dB |
| STA22_addr | 15 dB |
| STA23_addr | 30 dB |

Table 3

| Local BSS STA MAC address | Pathloss (Pathloss) |
|---|---|
| STA31_addr | 20 dB |
| STA34 _addr | 25 dB |

In addition, the second AP may also receive the first trigger frame sent by the first AP. The trigger frame further includes X first STA aids. Specifically, the first trigger frame includes first STA aid information on each RU. Each STA corresponds to a unique STA aid. The first AP allocates one RU to each first STA, and the RU may be used by the corresponding first STA to return a TB frame. The second AP receives and measures X TB frames on each RU, where the X TB frames are in one-to-one correspondence with the X first STAs, and determines a corresponding pathloss between each of the X first STAs and the second AP. In addition, the second AP may further record a MAC address of a first STA. For example, TB QoS null data in each TB frame may carry a MAC address of a first STA that sends the TB frame.

For example, the STA11 is the STA associated with the first AP. The second AP measures a signal strength sta11_ap2_rssi of a TB frame returned by the STA1, and calculates a pathloss sta11_ap2_pathloss=sta11_txpower-sta11_ap2_rssi. The second AP stores a MAC address of the first AP, a STA11 aid, a MAC address of the STA11, and sta11_ap2_pathloss to OBSS STA pathloss information of the second AP, where the OBSS STA pathloss information may be shown in Table 4. The first AP may be indicated by ap1, and the third AP may be indicated by ap3.

Table 4

| OBSS AP MAC address | OBSS STA AID | OBSS STA MAC address | Pathloss |
|---|---|---|---|
| AP1_addr | 1 | STA11_addr | 45 dB |
| | 2 | STA12_addr | 30 dB |
| | 3 | STA13_addr | 50 dB |
| AP3_addr | 1 | STA31_addr | 50 dB |
| | 4 | STA34_addr | 60 dB |

Similarly, the second AP may also receive a third trigger frame sent by an AP3, receive and measure a TB frame returned by a STA associated with the AP3, and determine a corresponding pathloss between the STA associated with the AP3 and the second AP, as shown in Table 3.

The first AP may also receive the second trigger frame sent by the second AP, receive and measure a TB frame returned by the STA associated with the second AP, and determine a corresponding pathloss between each STA associated with the second AP and the first AP; and receive the third trigger frame sent by the AP3, receive and measure a TB frame returned by the STA associated with the AP3, and determine a corresponding pathloss between each STA associated with the AP3 and the first AP, to obtain OBSS STA pathloss information, as shown in Table 5. In addition, the third AP may also obtain OBSS STA pathloss information, as shown in Table 6.

Table 5

| OBSS AP MAC address | OBSS STA AID | OBSS STA MAC address | Pathloss |
|---|---|---|---|
| AP2_addr | 1 | STA21_addr | 35 dB |
| | 2 | STA22_addr | 20 dB |
| | 3 | STA23_addr | 40 dB |
| AP3_addr | 1 | STA31_addr | 30 dB |
| | 4 | STA34_addr | 50 dB |

Table 6

| OBSS AP MAC address | OBSS STA AID | OBSS STA MAC address | Pathloss |
|---|---|---|---|
| AP1_addr | 1 | STA11_addr | 25 dB |
| | 2 | STA12_addr | 40 dB |
| | 3 | STA13_addr | 30 dB |
| AP2_addr | 1 | STA21_addr | 45 dB |
| | 2 | STA22_addr | 33 dB |
| | 3 | STA23_addr | 27 dB |

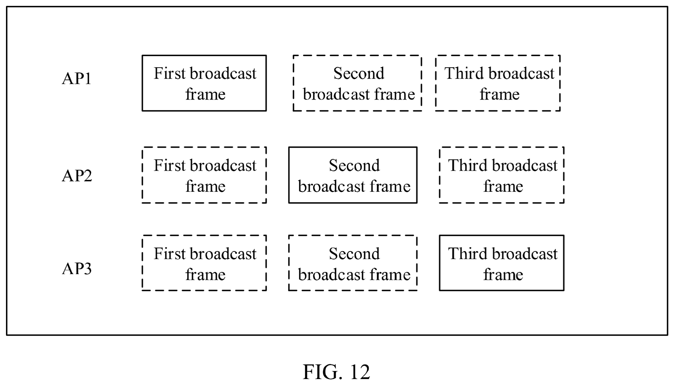

Further, the first AP sends a first broadcast frame, where the first broadcast frame includes the OBSS STA pathloss information stored in the first AP. The first broadcast frame may also be referred to as a first pathloss measurement result frame, and may also be defined as an 802.11 management frame. Similarly, the second AP sends a second broadcast frame, where the second broadcast frame includes the OBSS STA pathloss information stored in the second AP. The third AP sends a third broadcast frame, where the third broadcast frame includes the OBSS STA pathloss information stored in the third AP. In other words, the APs exchange the stored OBSS STA pathloss information, as shown in FIG. 12.

The first AP records, based on the received second broadcast frame and the received third broadcast frame, a corresponding pathloss (for example, the first three rows in Table 4) between each STA associated with the first AP and the second AP, and a corresponding pathloss (for example, the first three rows in Table 6) between each STA associated with the first AP and the third AP. Similarly, the second AP records, based on the received first broadcast frame and the received third broadcast frame, a corresponding pathloss (for example, the first three rows in Table 5) between each STA associated with the second AP and the first AP, and a corresponding pathloss (for example, the last three rows in Table 6) between each STA associated with the first AP and the third AP. The third AP records, based on the received second broadcast frame and the received third broadcast frame, a corresponding pathloss (for example, the last three rows in Table 5) between each STA associated with the third AP and the first AP, and a corresponding pathloss (for example, the last two rows in Table 4) between each STA associated with the third AP and the second AP.

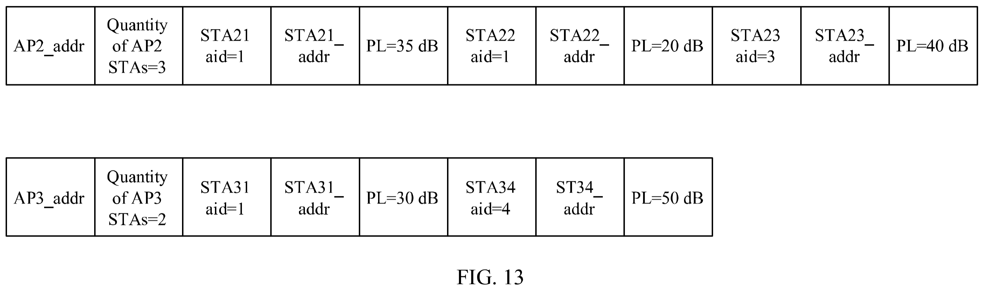

FIG. 13 is a diagram of a specific format of a first broadcast frame. The first broadcast frame is determined based on Table 5. As shown in FIG. 13, the first broadcast frame includes an OBSS AP MAC address, a quantity of OBSS STAs, each OBSS STA aid, an OBSS STA MAC address, and a pathloss between an OBSS STA and an AP1.

It may be understood that, to implement functions in the foregoing embodiments, the access points include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

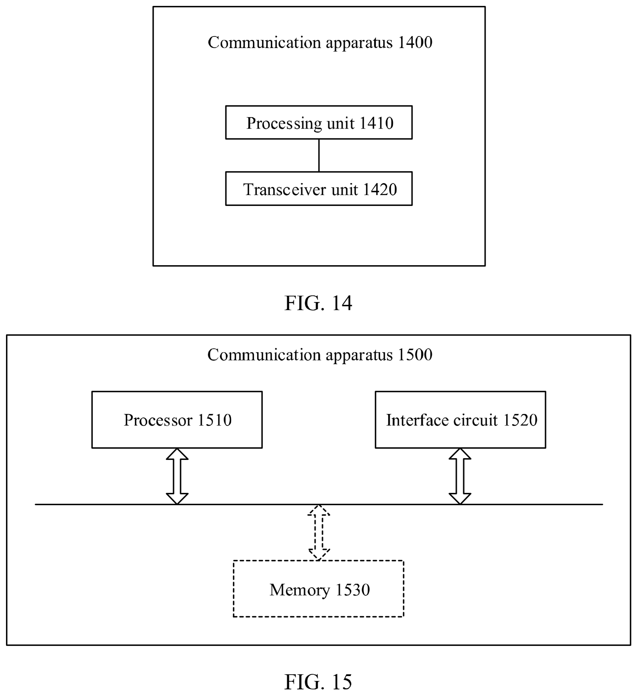

FIG. 14 and FIG. 15 are diagrams of possible structures of communication apparatuses according to embodiments of this application. These communication apparatuses may be configured to implement functions of the access points in the foregoing method embodiments, and therefore can also implement beneficial effects of the foregoing method embodiments. In this embodiment of this application, the communication apparatus may be the AP1 or the AP2 shown in FIG. 2, or may be a module (for example, a chip) used in the AP1 or the AP2.

As shown in FIG. 14, a communication apparatus 1400 includes a processing unit 1410 and a transceiver unit 1420. The communication apparatus 1400 is configured to implement a function of the first AP in the method embodiment shown in FIG. 3, or a function of the second AP in the method embodiment shown in FIG. 6.

When the communication apparatus 1400 is configured to implement the function of the first AP in the method embodiment shown in FIG. 3,

the processing unit 1410 invokes the transceiver unit 1420 to send a first frame, where the first frame includes first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received; and separately send data to at least one first STA.

In a possible design, the transceiver unit 1420 is further configured to: after separately sending the data to the at least one first STA, send a second frame, where the second frame is used to configure, for the at least one first STA, a resource occupied for sending the first acknowledgment frame.

In a possible design, the transceiver unit 1420 is further configured to send the first frame to at least one AP when sending the first frame, where a coverage area respectively corresponding to the at least one AP overlaps with a coverage area of the first AP, and the another AP that performs data transmission simultaneously with the first AP is one of the at least one AP.

When the communication apparatus 1400 is configured to implement the function of the second AP in the method embodiment shown in FIG. 6,

the processing unit 1410 invokes the transceiver unit 1420 to receive a first frame from a first AP, where the first frame includes first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received; when the first AP separately sends data to at least one first STA, separately send data to K second STAs, where K is a positive integer; and receive a second acknowledgment frame by using a bandwidth other than the first bandwidth, where the second acknowledgment frame indicates whether data sent by the second AP is successfully received.

In a possible design, the transceiver unit 1420 is further configured to send a third frame after separately sending the data to the K second STAs, where the third frame is used to configure, for the K second STAs, a resource occupied for sending the second acknowledgment frame.

In a possible design, the first frame further includes fourth indication information, and the fourth indication information indicates a tolerable interference signal strength respectively corresponding to the at least one first STA.

The processing unit 1410 is further configured to obtain a pathloss between each of the at least one first STA and the second AP; determine S first STAs from the at least one first STA based on the tolerable interference signal strength respectively corresponding to the at least one first STA, a transmit power of the second AP, and the pathloss between each of the at least one first STA and the second AP, where S is a positive integer, an interference signal strength from the second AP to a $t^{th}$ first STA in the S first STAs is greater than a tolerable interference signal strength of the $t^{th}$ first STA, the interference signal strength from the second AP to the $t^{th}$ second STA is determined based on the transmit power of the second AP and a pathloss between the $t^{th}$ first STA and the second AP, the $t^{th}$ first STA is one of the S first STAs, t is a positive integer, and t is less than or equal to S; and determine not to send the data on one or more sub-channels on which RUs respectively corresponding to the S first STAs are located.

In a possible design, the processing unit 1410 is configured to determine not to transmit a preamble on the one or more sub-channels.

In a possible design, the processing unit 1410 is further configured to obtain a pathloss between each of at least one second STA and the first AP, where the at least one second STA is a STA that the second AP expects to schedule; and determine the K second STAs from the at least one second STA based on a tolerable interference signal strength respectively corresponding to the at least one second STA, a transmit power of the first AP, and a pathloss between each of the at least one second STA and the first AP; and an interference signal strength from the first AP to a $k^{th}$ second STA in the K second STAs is not greater than a tolerable interference signal strength of the $k^{th}$ second STA, the interference signal strength from the first AP to the $k^{th}$ second STA is determined based on the transmit power of the first AP and a pathloss between the $k^{th}$ second STA and the first AP, the $k^{th}$ second STA is any one of the K second STAs, k is a positive integer, and k is less than or equal to K.

In a possible design, the transceiver unit 1420 is further configured to: after receiving the first frame from the first AP, receive a preamble sent by the first AP, where the preamble sent by the first AP indicates the resource occupied by the first AP for sending the data; the processing unit 1410 is further configured to start a backoff counter; and the transceiver unit 1420 is further configured to: when separately sending the data to the K second STAs, if the resource occupied by the first AP for sending the data is in an available state before the backoff counter ends, separately send the data to the K second STAs after the backoff counter ends.

For more detailed descriptions of the processing unit 1410 and the transceiver unit 1420, refer to the related descriptions in the method embodiment shown in FIG. 3 or FIG. 6.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, input data needed by the processor 1510 to run instructions, or data generated after the processor 1510 runs instructions.

When the communication apparatus 1500 is configured to implement the method shown in FIG. 3 or FIG. 6, the processor 1510 is configured to implement the function of the processing unit 1410, and the interface circuit 1520 is configured to implement the function of the transceiver unit 1420.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or any conventional processor, or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access point or a station. Alternatively, the processor and the storage medium may exist in the access point or the station as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or instructions are loaded and executed on a computer, all or some of the procedures or functions described in embodiments of this application are performed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A data transmission method, wherein the method comprises:

   sending, by a first access point AP, a first frame, wherein the first frame comprises first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received; and

   separately sending, by the first AP, data to at least one first station STA.

2. The method according to claim 1, wherein when the first AP allows the another AP to perform data transmission simultaneously with the first AP, the another AP that performs data transmission simultaneously with the first AP receives a corresponding acknowledgment frame by using a bandwidth other than the first bandwidth.

3. The method according to claim 1 or 2, wherein when the first AP allows the another AP to perform data transmission simultaneously with the first AP, an end time for sending data by the another AP that performs data transmission simultaneously with the first AP is the same as an end time for sending data by the first AP.

4. The method according to any one of claims 1 to 3, wherein after the separately sending, by the first AP, the data to the at least one first STA, the method further comprises:
   sending, by the first AP, a second frame, wherein the second frame is used to configure, for the at least one first STA, a resource occupied for sending the first acknowledgment frame.

5. The method according to claim 4, wherein the first frame further comprises third indication information, and the third indication information indicates duration of the second frame; and
   when the first AP allows the another AP to perform data transmission simultaneously with the first AP, duration for which the another AP that performs data transmission simultaneously with the first AP sends a frame of a same type as the second frame is the same as the duration of the second frame.

6. The method according to any one of claims 1 to 5, wherein when the first AP allows the another AP to perform data transmission simultaneously with the first AP, a part or all of a resource occupied by the first AP for sending the data is used by the another AP that performs data transmission simultaneously with the first AP to send the data.

7. The method according to any one of claims 1 to 6, wherein the first frame further comprises fourth indication information, and the fourth indication information indicates a tolerable interference signal strength respectively corresponding to the at least one first STA; and
   when the first AP allows the another AP to perform data transmission simultaneously with the first AP, if a target first STA exists, the another AP that performs data transmission simultaneously with the first AP does not perform data transmission on one or more sub-channels on which a resource unit RU corresponding to the target first STA is located, wherein an interference signal strength from the another AP to the target first STA is greater than a tolerable interference signal strength of the target first STA, the interference signal strength from the another AP to the target first STA is determined based on a transmit power of the another AP and a pathloss between the another AP and the target first STA, and the target first STA is one of the at least one first STA.

8. The method according to any one of claims 1 to 7, wherein the sending, by the first AP, the first frame comprises:

   sending, by the first AP, the first frame to at least one AP, wherein a coverage area respectively corresponding to the at least one AP overlaps with a coverage area of the first AP, and

   the another AP that performs data transmission simultaneously with the first AP is one of the at least one AP.

9. A data transmission method, wherein the method comprises:

   receiving, by a second AP, a first frame from a first AP, wherein the first frame comprises first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received;

when the first AP separately sends data to at least one first STA, separately sending, by the second AP, data to K second STAs, wherein K is a positive integer; and

receiving, by the second AP, a second acknowledgment frame by using a bandwidth other than the first bandwidth, wherein the second acknowledgment frame indicates whether data sent by the second AP is successfully received.

10. The method according to claim 9, wherein an end time for sending data by the second AP is the same as an end time for sending data by the first AP.

11. The method according to claim 9 or 10, wherein after the separately sending, by the second AP, the data to the K second STAs, the method further comprises:

sending, by the second AP, a third frame, wherein the third frame is used to configure, for the K second STAs, a resource occupied for sending the second acknowledgment frame.

12. The method according to claim 11, wherein the first frame further comprises third indication information, the third indication information indicates duration of a second frame, and the second frame is used to configure, for the at least one first STA, a resource occupied for sending the first acknowledgment frame; and

duration for which the second AP sends the third frame is the same as the duration of the second frame.

13. The method according to any one of claims 9 to 12, wherein a part or all of a resource occupied by the first AP for sending the data is used by the second AP to send the data.

14. The method according to any one of claims 9 to 13, wherein the first frame further comprises fourth indication information, and the fourth indication information indicates a tolerable interference signal strength respectively corresponding to the at least one first STA; and

the method further comprises:

obtaining, by the second AP, a pathloss between each of the at least one first STA and the second AP;

determining, by the second AP, S first STAs from the at least one first STA based on the tolerable interference signal strength respectively corresponding to the at least one first STA, a transmit power of the second AP, and the pathloss between each of the at least one first STA and the second AP, wherein S is a positive integer, an interference signal strength from the second AP to a $t^{th}$ first STA in the S first STAs is greater than a tolerable interference signal strength of the $t^{th}$ first STA, the interference signal strength from the second AP to the $t^{th}$ second STA is determined based on the transmit power of the second AP and a pathloss between the $t^{th}$ first STA and the second AP, the $t^{th}$ first STA is one of the S first STAs, t is a positive integer, and t is less than or equal to S; and

skipping, by the second AP, sending the data on one or more sub-channels on which RUs respectively corresponding to the S first STAs are located.

15. The method according to claim 14, further comprising:

skipping, by the second AP, transmitting a preamble on the one or more sub-channels.

16. The method according to any one of claims 9 to 15, further comprising:

obtaining, by the second AP, a pathloss between each of at least one second STA and the first AP, wherein the at least one second STA is a STA that the second AP expects to schedule; and

determining, by the second AP, the K second STAs from the at least one second STA based on a tolerable interference signal strength respectively corresponding to the at least one second STA, a transmit power of the first AP, and a pathloss between each of the at least one second STA and the first AP; and

an interference signal strength from the first AP to a $k^{th}$ second STA in the K second STAs is not greater than a tolerable interference signal strength of the $k^{th}$ second STA, the interference signal strength from the first AP to the $k^{th}$ second STA is determined based on the transmit power of the first AP and a pathloss between the $k^{th}$ second STA and the first AP, the $k^{th}$ second STA is any one of the K second STAs, k is a positive integer, and k is less than or equal to K.

17. The method according to any one of claims 9 to 16, wherein after the receiving, by the second AP, the first frame from the first AP, the method further comprises:

receiving, by the second AP, a preamble sent by the first AP, wherein the preamble sent by the first AP indicates the resource occupied by the first AP for sending the data; and

starting, by the second AP, a backoff counter; and

the separately sending, by the second AP, the data to the K second STAs comprises:

if the resource occupied by the first AP for sending the data is in an available state before the backoff counter ends, separately sending, by the second AP, the data to the K second STAs after the backoff counter ends.

18. The method according to claim 17, wherein that the resource occupied by the first AP for sending the data is in the available state means that the resource occupied by the first AP for sending the data is occupied, but a reserved resource is not occupied.

19. The method according to claim 18, wherein a size of the reserved resource is any one of 26 subcarriers, 52 subcarriers, or 106 subcarriers.

20. The method according to claim 18 or 19, wherein a resource occupied by the second AP for sending the data further comprises the reserved resource, and the resource occupied by the first AP for sending the data does not comprise the reserved resource.

21. A data transmission method, wherein the method comprises:

sending, by a first access point AP, a first frame, wherein the first frame comprises first indication information and second indication information, the first indication information indicates whether the first AP allows another AP to perform data transmission simultaneously with the first AP, the second indication information indicates a first bandwidth, the first bandwidth is used by the first AP to receive a first acknowledgment frame, and the first acknowledgment frame indicates whether data sent by the first AP is successfully received;

separately sending, by the first AP, data to at least one first STA;

receiving, by the second AP, the first frame from the first AP;

when the first AP separately sends the data to the at least one first STA, separately sending, by the second AP, data to K second STAs, wherein K is a positive integer; and

receiving, by the second AP, a second acknowledgment frame by using a bandwidth other than the first bandwidth, wherein the second acknowledgment frame indicates whether data sent by the second AP is successfully received.

22. A communication apparatus, comprising a unit or a module configured to perform the method according to any one of claims 1 to 8, or comprising a unit or a module configured to perform the method according to any one of claims 9 to 20.

23. A communication apparatus, comprising one or more processors and one or more memories, wherein the one or more memories store one or more programs, and when the program is executed by the one or more processors, the apparatus is enabled to perform the method according to any one of claims 1 to 8, or perform the method according to any one of claims 9 to 20.

24. A chip system, wherein the chip system comprises at least one chip and a memory, and the at least one chip is configured to read and execute a program stored in the memory, to implement the method according to any one of claims 1 to 8, or implement the method according to any one of claims 9 to 20.

25. A readable storage medium, wherein the readable storage medium comprises a program, and when the program is run on an apparatus, the apparatus is enabled to perform the method according to any one of claims 1 to 8, or perform the method according to any one of claims 9 to 20.

26. A communication system, wherein the system comprises a plurality of APs and a plurality of STAs, a first AP in the plurality of APs performs the method according to any one of claims 1 to 8, and a second AP in the plurality of APs performs the method according to any one of claims 9 to 20.

Access point (AP)

Station 1
(STA1)

Station 2
(STA2)

FIG. 1

STA1

AP1

AP2

STA2

FIG. 2

```
┌─────────────────┐                    ┌──────────────────────┐
│    First AP     │                    │  At least one first STA │
└─────────────────┘                    └──────────────────────┘
         │                                        │
         │        S301: First frame               │
         │───────────────────────────────────────>│
         │                                        │
         │           S302: Data                   │
         │───────────────────────────────────────>│
         │                                        │
         │        S303: Second frame              │
         │───────────────────────────────────────>│
         │                                        │
         │   S304: First acknowledgment frame     │
         │<───────────────────────────────────────│
         │                                        │
         │                                        │
```

FIG. 3

FIG. 4

EP 4 734 606 A1

| RU allocation | | Fourth<br>indication<br>information | |
|---|---|---|---|
| AID12 | RU<br>Allocation | Tolerable<br>Interference RSSI | Resv |

| Frame<br>Control | Duration | RA | TA | Common<br>info | User info<br>list | Padding | FCS |
|---|---|---|---|---|---|---|---|

Frame control　　　Duration　　　　　　　　　　Common<br>information　　　User<br>information　　　　Padding

| Trigger<br>Type | Resv | More<br>TF | CS<br>required | UL<br>BW | Co-SR<br>Flag | TB BA BW<br>bitmap | MU-BAR<br>Txtime | Resv |
|---|---|---|---|---|---|---|---|---|

Trigger type　　　　　　　More TFs　　　CS<br>required　　　　　First<br>indication<br>information　　Second<br>indication<br>information　　Third<br>indication<br>information

FIG. 5

FIG. 6

An interference strength from the second AP to the STA12 is greater than a tolerable interference signal strength of the STA12

An interference strength from the first AP to the STA23 is greater than a tolerable interference signal strength of the STA23

FIG. 7

| Data of the STA11 | Data of the STA21 |
|---|---|
| Data of the STA12 | Puncture (puncture) |
| Data of the STA13 | Data of the STA22 |

FIG. 8

Resource occupied by a first AP for sending data

a

Resource occupied by a second AP for sending data

b

FIG. 9

| First AP | | X first STAs |
|---|---|---|

S1001: First trigger frame

S1002: TB frame

S1003: The first AP receives and measures X TB frames, and determines a corresponding pathloss between each of the X first STAs and the first AP

FIG. 10

EP 4 734 606 A1

AP1 | First trigger frame | STA11 TB / STA12 TB / STA13 TB | Second trigger frame | STA21 TB / STA22 TB / STA23 TB | Third trigger frame | STA31 TB / STA34 TB

STA11 | First trigger frame | STA11 TB

STA12 | First trigger frame | STA12 TB

STA13 | First trigger frame | STA13 TB

AP2 | First trigger frame | STA11 TB / STA12 TB / STA13 TB | Second trigger frame | | Third trigger frame | STA31 TB / STA34 TB

STA21 | Second trigger frame | STA21 TB

STA22 | Second trigger frame | STA22 TB

STA23 | Second trigger frame | STA23 TB

AP3 | First trigger frame | STA11 TB / STA12 TB / STA13 TB | Second trigger frame | STA21 TB / STA22 TB / STA23 TB | Third trigger frame

STA31 | Third trigger frame | STA31 TB

STA34 | Third trigger frame | STA34 TB

FIG. 11

| | | | |
|---|---|---|---|
| AP1 | First broadcast frame | Second broadcast frame | Third broadcast frame |
| AP2 | First broadcast frame | Second broadcast frame | Third broadcast frame |
| AP3 | First broadcast frame | Second broadcast frame | Third broadcast frame |

FIG. 12

| AP2_addr | Quantity of AP2 STAs=3 | STA21 aid=1 | STA21_addr | PL=35 dB | STA22 aid=1 | STA22_addr | PL=20 dB | STA23 aid=3 | STA23_addr | PL=40 dB |
|---|---|---|---|---|---|---|---|---|---|---|

| AP3_addr | Quantity of AP3 STAs=2 | STA31 aid=1 | STA31_addr | PL=30 dB | STA34 aid=4 | ST34_addr | PL=50 dB |
|---|---|---|---|---|---|---|---|

FIG. 13

Communication apparatus 1400

Processing unit 1410

Transceiver unit 1420

FIG. 14

Communication apparatus 1500

Processor 1510

Interface circuit 1520

Memory 1530

FIG. 15

## INTERNATIONAL SEARCH REPORT

| International application No. |
| --- |
| **PCT/CN2024/105311** |

| A. | CLASSIFICATION OF SUBJECT MATTER |
| --- | --- |

H04W 28/20(2009.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT; ENTXTC; DWPI; CNKI; IEEE: 接入点, 协同, 协作, 协调, 共享, 协同空间复用, 帧, 确认帧, 指示信息, 标识, 标志, 允许, 带宽, access point, coordination, coordinated, shared, sharing, coordinated spatial reuse, frame, acknowledgement frame, ACK, indication information, identity, flag, allow, bandwidth

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113395701 A (HUAWEI TECHNOLOGIES CO., LTD.) 14 September 2021 (2021-09-14) description, paragraphs [0004] -[0009] | 1-26 |
| A | CN 114124324 A (HUAWEI TECHNOLOGIES CO., LTD.) 01 March 2022 (2022-03-01) entire document | 1-26 |
| A | CN 116133147 A (HUAWEI TECHNOLOGIES CO., LTD.) 16 May 2023 (2023-05-16) entire document | 1-26 |
| A | US 2021400717 A1 (SAMSUNG ELECTRONICS CO., LTD.) 23 December 2021 (2021-12-23) entire document | 1-26 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 September 2024** | **10 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/105311**

| Patent document cited in search report | | | Publication date (day/month/year) | Patent family member(s) | | | Publication date (day/month/year) |
|---|---|---|---|---|---|---|---|
| CN | 113395701 | A | 14 September 2021 | WO | 2021180091 | A1 | 16 September 2021 |
| | | | | US | 2023007684 | A1 | 05 January 2023 |
| CN | 114124324 | A | 01 March 2022 | WO | 2022042649 | A1 | 03 March 2022 |
| | | | | US | 2023208577 | A1 | 29 June 2023 |
| | | | | EP | 4207659 | A1 | 05 July 2023 |
| | | | | CN | 116997030 | A | 03 November 2023 |
| CN | 116133147 | A | 16 May 2023 | TW | 202320580 | A | 16 May 2023 |
| | | | | WO | 2023083023 | A1 | 19 May 2023 |
| | | | | EP | 4408113 | A1 | 31 July 2024 |
| US | 2021400717 | A1 | 23 December 2021 | EP | 3930410 | A1 | 29 December 2021 |
| | | | | US | 2023164837 | A1 | 25 May 2023 |
| | | | | TW | 202205824 | A | 01 February 2022 |
| | | | | CN | 113825222 | A | 21 December 2021 |
| | | | | KR | 20210157301 | A | 28 December 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311002198